Europäisches Patentamt

European Patent Office

Office européen des brevets

(19)

(11) Veröffentlichungsnummer: **0 291 791 B1**

# EUROPÄISCHE PATENTSCHRIFT

(12)

(45) Veröffentlichungstag der Patentschrift: **25.09.91**

(51) Int. Cl.⁵: **H04Q 11/04**, H04Q 3/545

(21) Anmeldenummer: **88107337.3**

(22) Anmeldetag: **06.05.88**

(54) Schaltungsanordnung für Fernmeldevermittlungsanlagen, insbesondere PCM-Zeitmultiplex-Fernsprechvermittlungsanlagen, mit einem Zentrallkoppelfeld und mit an dasselbe angeschlossenen dezentralen Teilkoppelfeldern.

(30) Priorität: **22.05.87 DE 3717387**

(43) Veröffentlichungstag der Anmeldung:
**23.11.88 Patentblatt 88/47**

(45) Bekanntmachung des Hinweises auf die
Patenterteilung:
**25.09.91 Patentblatt 91/39**

(84) Benannte Vertragsstaaten:
**AT BE CH DE ES FR GB GR IT LI NL SE**

(56) Entgegenhaltungen:
**FR-A- 2 180 171**
**LU-A- 86 734**
**US-A- 3 974 340**

**NACHRICHTENTECHNISCHE ZEITSCHRIFT,
Band 38, Nr. 10, Oktober 1985, Seiten
708-710,712, Berlin, DE; F.C. KUZNIK:
"Vermittlungssystem 5ESS-PRX für den öffentlichen Fernsprechverkehr"**

(73) Patentinhaber: **Siemens Aktiengesellschaft
Wittelsbacherplatz 2
W-8000 München 2(DE)**

(72) Erfinder: **Eberlein, Klaus, Ing. (grad.)
Heiglstrasse 12
W-8190 Wolfratshausen(DE)**
Erfinder: **Hlawa, Fritz, Dipl.-Ing.
Linienstrasse 69
W-8024 Deisenhofen(DE)**
Erfinder: **Schaich, Gerhard, Ing. (grad.)
Theresienhöhe 60
W-8000 München 2(DE)**
Erfinder: **Schmidt, Lothar, Ing. (grad.)
Albert-Schweizer-Ring 25
W-8080 Fürstenfeldbruck(DE)**

**Beschreibung**

Durch die Zeitschrift "telcom report", vierter Jahrgang (1981), Beiheft "Digitalvermittlungssystem EWSD", insbesondere durch den auf Seite 19 beginnenden Artikel, sind bereits PCM-Fernsprechvermittlungsanlagen bekannt, die mit einem mehrstufigen, Zeitmultiplex-Eingänge und Zeitmultiplex-Ausgänge aufweisenden zentralen Koppelfeld und einem zentralen Prozessor, sowie mit einer Mehrzahl von einem Anschluß von Zeitmultiplex-Verbindungsleitungen dienenden Anschlußgruppen ausgestattet sind, von denen jene an einen Zeitmultiplex-Eingang und einen Zeitmultiplex-Ausgang des Koppelfeldes angeschlossen ist, und von denen jede eine Mehrzahl von dem Anschluß jeweils einer Zeitmultiplex-Verbindungsleitung dienenden Anschlußeinheiten aufweist, die ihrerseits mit einer zu der betreffenden Anschlußgruppe gehörenden Zeitmultiplex-Koppeleinrichtung verbunden und über diese mit Kanälen des der jeweiligen Anschlußgruppe entsprechenden Zeitmultiplex-Einganges und des entsprechenden Zeitmultiplex-Ausganges des Koppelfeldes verbindar ist.

In Fernsprechvermittlungsanlagen dieser Art fassen Zeitmultiplex-Verbindungsleitungen immer eine größere Anzahl von zum Beispiel vierundzwanzig, dreißig, sechzig oder noch mehr Kanalpaaren zusammen. Ein Kanalpaar umfaßt immer einen Kanal in der einen Übertragungsrichtung und einen Kanal in der anderen Übertragungsrichtung. Ein Kanalpaar ist pro Verbindung erforderlich (abgesehen von sogenannten Mehrkanalverbindungen). Wie die Darstellung in der genannten Zeitschrift zeigt, ist eine größere Anzahl von Anschlußgruppen pro Fernsprechvermittlungsstelle mit einem sicherheitshalber gedoppelten Koppelfeld vorgesehen. Jede Anschlußgruppe umfaßt eine Mehrzahl von Anschlußeinheiten. Es gibt Anschlußeinheiten verschiedener Art je nach der speziellen Art der angeschlossenen Leitungen. Teilnehmerleitungen sind in der Regel Analog-Leitungen, können aber auch in PCM-Technik realisiert sein. Verbindungsleitungen können ebenfalls Analog-Leitungen sein. Sie können aber auch als PCM-Kanäle realisiert sein, die in bekannter Weise in PCM-Übertragungssystemen mit jeweils einer Zeitmultiplex-Leitung zusammengefaßt sind. Die genannten Anschlußeinheiten sind unterschiedlich aufgebaut, und zwar jeweils entsprechend der betreffenden Technik der anzuschließenden Teilnehmer- und Verbindungsleitungen, und je nachdem, ob hierbei Analog-Technik oder Zeitmultiplex-Technik realisiert ist. In der Regel wird eine Anschlußeinrichtung für eine Mehrzahl von zum Beispiel acht Analog-Teilnehmerleitungen vorgesehen. Ebenso wird eine Anschlußeinheit für eine Mehrzahl von Analog-Verbindungsleitungen vorgesehen. Pro Zeitmultiplex-Verbindungsleitung eines PCM-Übertragungssystems wird in der Regel eine eigene Anschlußeinrichtung vorgesehen. Ebenso gut wäre es aber auch möglich, an eine einzige Anschlußeinrichtung mehr als eine Zeitmultiplex-Verbindungsleitung eines PCM-Übertragungssystems anzuschließen, zum Beispiel zwei Zeitmultiplex-Leitungen.

Durch naturgemäße Zusammenfassung einer weiter oben beispeilsweise angegebenen Anzahl von Kanälen jeweils in einem einzigen PCM-Übertragungssystem ist deren Zuordnung selbstverständlich auch nur zu einer einzigen Verkehrsrichtung bedingt, denn die betreffenden Kanäle müssen ja den gleichen Verlauf nehmen wie die Zeitmultiplex-Leitung dieses PCM-Übertragungssystems. Da ebenso aufgrund dieser Zusammenfassung der Anschluß eine Zeitmultiplex-Leitung eines PCM-Übertragungssystems an eine Anschlußeinheit auch eine Zuordnung der betreffenden Kanäle zu einer einzigen Anschlußeinheit und damit zu einer einzigen Anschlußgruppe zwangsläufig erfordert ist, ergibt sich für den Fall, daß für eine Verkehrsrichtung nur die Kanäle (Kanalpaare) eines einzigen PCM-Übertragungssystems bereitgestellt sind, daß bei einem Ausfall einer Anschlußgruppe sämtliche Verbindungsmöglichkeiten in der betreffenden Verkehrsrichtung ausfallen, also in vermittlungstechnischer Hinsicht ein ganzes Richtungsbündel.

Um den zuvor erläuterten Effekt des Totalausfalles eines Richtungsbündels lediglich aufgrund des Ausfalles einer Anschlußgruppe zu vermeiden, ist bisher in bekannten Fällen vorgesehen worden, zwei voneinander unabhängige PCM-Übertragungssysteme pro Verkehrsrichtung vorzusehen, und die Zeitmultiplex-Leitungen dieser Übertragungssysteme an Anschlußeinheiten zweier verschiedener Anschlußgruppen anzuschalten. Dies ist besonders bei kleinen Richtungsbündeln wegen der Dopplung der PCM-Übertragungssysteme aufwendig und unwirtschaftlich.

Um nun in einer Schaltungsanordnung der eingangs angegebenen Art im Hinblick auf die Möglichkeit eines Ausfalles einer Anschlußgruppe eine Doppelung eines PCM-Übertragungssystems pro Verkehrsrichtung nicht vorsehen zu müssen und um dabei zu vermeiden, daß alleine aufgrund des Ausfalles einer Anschlußgruppe eine ganze Verkehrsrictung, das heißt der Kanalpaare des betreffenden PCM-Übertragungssystems, ausfallen kann bzw. muß, ist bereits für eine Fernsprechvermittlungsanlage der eingangs angegebenen bekannten Art vorgeschlagen worden, jeweils zwei Anschlußgruppen paarweise einander zuzuordnen, wobei weiterhin vorgesehen ist, daß die Anschlußeinrichtungen jeder dieser beiden Anschlußgruppen, die im Normalbetrieb mit der Zeitmultiplex-Koppeleinrichtung ihrer eigenen Anschlußgruppe verbunden sind, im Notbetrieb einer der beiden Anschlußgruppen zu der Zeitmultiplex-Koppeleinrichtung der jeweils anderen Anschlußgruppe umschaltbar sind.

Dies bewirkt in dem bekannten Fall, daß ein PCM-Übertragungssystem mit seinen Kanälen bei Ausfall der betreffenden Anschlußgruppe weiter betrieben werden kann. In diesem Falle wird also eine doppelte Anzahl von Kanälen (Kanalpaaren) über eine Anschlußgruppe, d.h. über die jeweils andere der beiden einander paarweise zugeordneten Anschlußgruppen vermittelt. Dies führt zwar zu einer besonders großen verkehrsmäßigen Belastung der betreffenden Anschlußgruppe und zu einer Mehrung von Gassenbesetztfällen, jedoch haben sämtliche über die betreffenden Kanäle im Aufbau befindlichen Verbindungen die gleiche Erfolgs-Chance. Dabei kann es sich ergeben, daß eine Mehrzahl von Verkehrsrichtungen nur noch mit der halben Verkehrsleistung betrieben werden kann. Jedoch können Verbindungen in sämtliche Verkehrsrichtungen überhaupt noch hergestellt werden und es wird der Totalausfall der primär betroffenen Verkehrsrichtung bzw. Verkehrsrichtungen vermieden.

Die Erfindung bezieht sich nun auf eine Schaltungsanordnung ähnlicher Art, und zwar auf eine Schaltungsanordnung für zentralgesteuerte Fernmeldevermittlungsanlagen, insbesondere PCM-Zeitmultiplex-Fernsprechvermittlungsanlagen, in denen ein der Verbindungsdurchschaltung dienendes zentrales Koppelfeld samt einem unter anderem dessen Steuerung sowie einer hierfür erforderlichen Schaltkennzeichenverarbeitung dienenden zentralen Prozessor vorgesehen ist, und in denen eine Mehrzahl von dezentralen Anschlußgruppen mit je einem Teilkoppelfeld zum außenseitigen Anschluß von Verbindungs- und/oder Teilnehmerleitungen und mit je einer dezentralen Steueeinrichtung zur Schaltkennzeichenaufnahme von diesen Leitungen, zur Schaltkennzeichenvorverarbeitung sowie zur Schaltkennzeichenweiterleitung an den zentralen Prozessor und zur Schaltkennzeichenaussendung auf diese Leitungen ausgestattet ist, und in denen in diesen Anschlußgruppen Teilkoppelfelder innenseitig über Gruppen von Linkleitungen gruppenweise getrennt mit Koppelfeldanschlüssen des zentralen Koppelfeldes verbunden ist und in denen die Anschlußgruppen jeweils zu zweit einander paarweise zugeordnet sind, und in denen innerhalb jeder derselben zum außenseitigen Anschluß von Teilnehmer-und/oder Verbindungs-Leitungen dienende und innerhalb der jeweiligen Anschlußgruppe primär mit ihrem Teilkoppelfeld verbundene Anschlußeinheiten, z.B. Teilnehmeranschlußschaltungen, Mehrfachteilnehmeranschlußschaltungen, Verbindungsleitungs(-mehrfach- )abschlußschaltungen und dergleichen, in einer Weise umschaltbar sind, durch die die Anschlußeinheiten jeweils einer ersten dieser beiden Anschlußgruppen zusätzlich an das Teilkoppelfeld der jeweils anderen, also einer jeweils zweiten Anschlußgruppe angeschaltet werden, woraufhin für die über die umgeschalteten Anschlußeinheiten durchzuschaltenden Verbindungen die entsprechende Schaltkennzeichenbearbeitung sowie Teilkoppelfeld-Einstellung ebenfalls von der dezentralen Steuereinrichtung der anderen, also zweiten Anschlußgruppe durchgeführt wird.

In einer Schaltungsanordnung dieser Art besteht das Problem, daß im Zeitpunkt der Umschaltung in der Regel bereits eine größere Anzahl von Verbindungen besteht, d.h. Verbindungen die bereits von Teilnehmerstelle zu Teilnehmerstelle vollständig durchgeschaltet sind, und daß diese Verbindungen unterbrochen werden. Dies ist sowohl für die betreffenden Teilnehmer sehr störend, als auch für die betreffenden Vermittlungsstellen sehr arbeitsaufwendig, weil die abgebrochenen Verbindungen alle neu aufgebaut werden müssen. Der störende Effekt für die betreffenden Teilnehmer besteht nicht nur darin, daß laufende Telefongespräche unvorhersehbar und abrupt unterbrochen werden, sondern auch darin, daß von einer solchen Unterbrechung auch Verbindungen betroffen werden können, die zu Datenübertragungszwecken, Steuerungszwecken, Überwachungszwecken und dgl. aufgebaut sein können. Ein anschließender Wiederaufbau jeder der abgebrochenen Verbindungen bedeutet für die betreffenden Vermittlungsanlagen, insbesondere für zentralgesteuerte Vermittlungsanlagen, daß die betreffenden informationsverarbeitenden sowie die die Verbindungsdurchschaltungen steuernden zentralen und teilzentralen Schalteinrichtungen einer stoßartigen Überbelastung ausgesetzt werden.

Für die Erfindung besteht die Aufgabe, in einer Schaltungsanordnung der zuletzt angegebenen Art Vorkehrungen dafür zu treffen, daß im Zusammenhang mit einer erforderlich werdenden Umschaltung - aus welchem Grunde eine solche auch immer erforderlich werden mag - bestehende Verbindungen nicht zu unterbrechen und einen Wiederaufbau derselben nebst den aufgezeigten negativen Auswirkungen, die ja nicht nur in der betreffenden einzelnen Vermittlungsstelle, sondern auch in sämtlichen anderen von den betreffenden abgebrochenen Verbindungen tangierten Vermittlungsstellen auftreten, in Zusammenhang einer solchen Umschaltung nicht erforderlich werden zu lassen.

Die Erfindung löst die gestellte Aufgabe dadurch, daß in Vorbereitung auf eine Umschaltung innerhalb jedes dieser Paare von einander zugeordneten Anschlußgruppen jede der betreffenden beiden dezentralen Steuereinrichtungen Verbindungsdaten, die bezüglich aller über das jeweils zugeordnete Teilkoppelfeld bestehender individueller Verbindungen angeben, welcher aussenseitige Teilkoppelfeldanschluß jeweils mit welchem innenseitigen Teilkoppelfeldanschluß verbunden ist, von jeder der beiden dezentralen Steuereinrichtungen über dezentrale, den Anschlußgruppen-Paaren jeweils individuelle Übertragungswege an die jeweils entsprechende Partner-Steuereinrichtung übertragen werden, und daß jede der beiden dezentralen Steuereinrichtungen anhand dieser übertragenen und jeweils von ihr empfangenen Verbindungsdaten einzelne Teilverbindungen über das Teilkoppelfeld der betreffenden zugeordneten Anschlußgruppe jeweils zwischen innenseitigen Teilkoppelfeldanschlüssen und außenseitigen Teilkoppelfeldanschlüssen aufbaut, und zwar einerseits solchen außenseitigen Teilkoppelfeldanschlüssen, mit denen durch eine Umschaltung die Anschlußeinheiten der jeweiligen Partner-Anschlußgruppe durch die Umschaltung verbindbar sind, und andererseits solchen innenseitigen Teilkoppelfeldanschlüssen, mit denen durch diese Umschaltung die Anschlußeinheiten der jeweiligen Partner-Anschlußgruppe verbindbar sind.

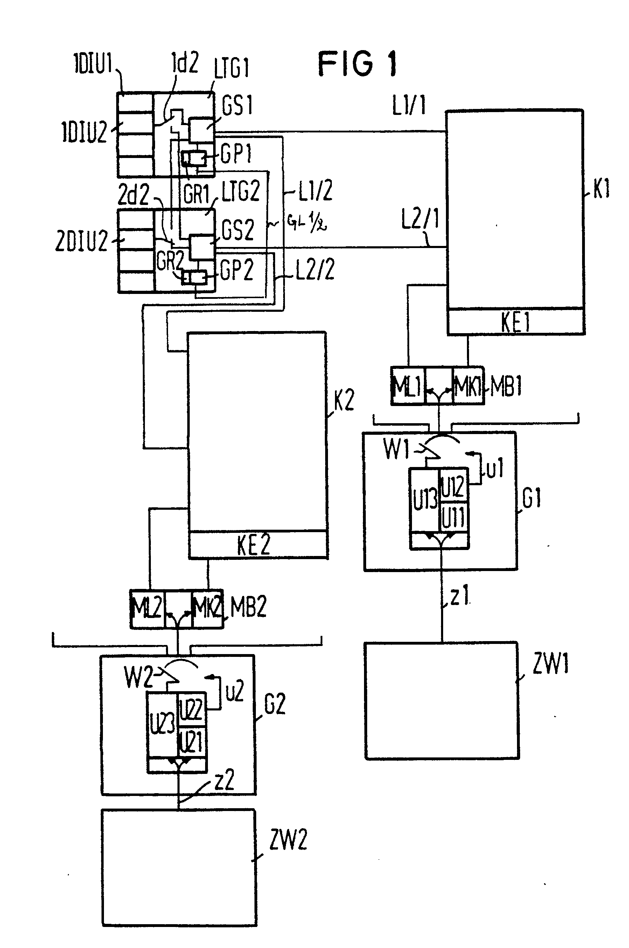

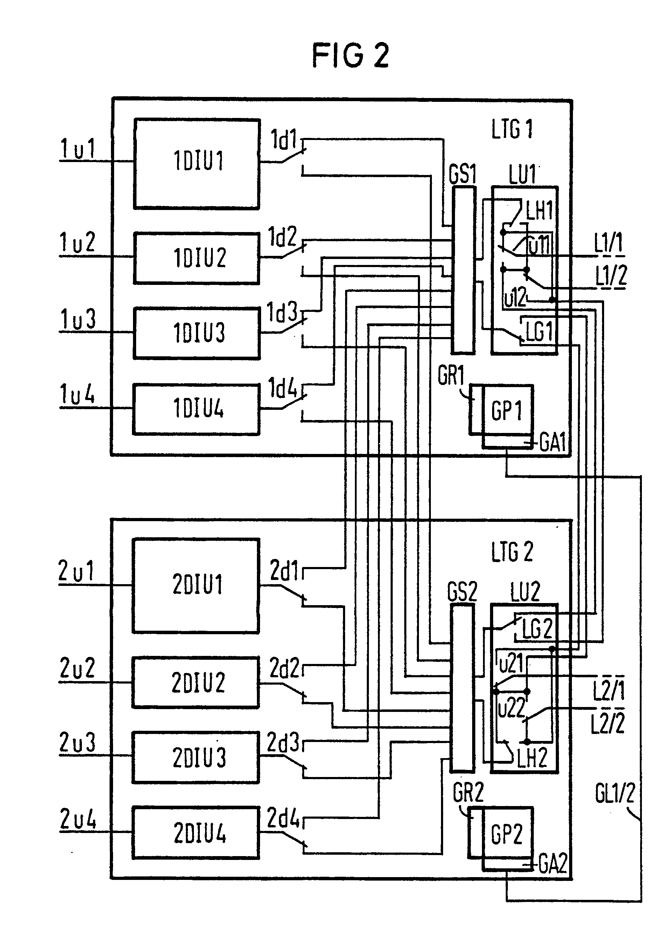

In den Zeichnungen Figur 1 und Figur 2 ist ein Ausführungsbeispiel der Erfindung nur in wesentlich zu ihrem Verständnis beitragenden Bestandteilen dargestellt, worauf dieselbe jedoch keineswegs beschränkt ist. Dabei zeigt Figur 1 auszugsweise eine Fernsprechvermittlungsanlage der Art, wie sie auch in der deutschen Patentschrift 3 128 365 beschrieben ist. Figur 2 zeigt weitere erfindungswesentliche Details.

Bevor die Beschreibung speziell auf die erfindungswesentlichen Besonderheiten des Ausführungsbeispieles eingeht, erläutert sie die Arbeitsweise einer neuzeitlichen Fernsprechvermittlungsanlage, in der die Erfindung angewendet ist. Dabei geht die Beschreibung von bekannten Zeitmultiplex-Fernsprechvermittlungsanlagen mit PCM-Technik aus, wie sie in der Fachliteratur vielfältig und detailliert beschrieben sind, beispielsweise in der weiter oben genannten zeitschrift "telcom report". Hierin sind unter anderem auf Seite 19 ff periphere Anschlußgruppen in diesem Fernsprechvermittlungssystem beschrieben. Wie es ähnlich auch in Bild 1 auf seite 8 der genannten Zeitschrift dargestellt ist, sind Koppelfeld (SN) und zentraler Prozessor (CP) gedoppelt vorgesehen, in Figur 1 mit "K1" und "K2" und mit "ZW1" und "ZW2" bezeichnet.

In den Zeichnungen sind zwei Anschlußgruppen LTG1 und LTG2 auszugsweise dargestellt, die zu einer zentralgesteuerten Zeitmultiplex-Fernsprechvermittlungsanlage in PCM-Technik gemäß Figur 1 gehören. Sie sind in an sich bekannter Weise über Zeitmultiplex-Leitungen L1/1 L2/1, L1/2 und L2/2 an das mehrstufige, Zeitmultiplex-Eingänge und Zeitmultiplex-Ausgänge aufweisende zentrale und gedoppelte Koppelfeld K1/K2 gemäß Figur 1 angeschlossen. Dabei ist jeder dieser Anschlüsse entsprechend dieser Dopplung des Koppelfeldes ein zweifacher. Jede dieser beiden pro Anschlußgruppe, zum Beispiel LTG1, vorgesehenen Zeitmultiplex-Leitungen weist für jede der beiden Übertragungsrichtungen je eine größere Anzahl von zum Beispiel dreißig Kanälen auf und ist dementsprechend - wie auch in der weiter oben genannten Patentschrift im Detail dargestellt und beschrieben - sowohl an je einen Zeitmultiplex-Eingang als auch an je einen Zeitmultiplex-Ausgang jedes dieser beiden Koppelfelder angeschlossen.

Ferner ist gemäß Figur 1 zu jedem der beiden parallelen Koppelfelder K1/K2 je ein zentraler Prozessor ZW1 bzw. ZW2 vorgesehen, mit dessen Hilfe die gesamten Steuerungsvorgänge für die Verbindungsherstellung über das jeweilige zentrale Koppelfeld K1 bzw. K2 in an sich bekannter Weise mittels einer Puffereinrichtung MB1/MK1 bzw. MB2/MK2 und einer Koppelfeldeinstelleinrichtung KE1 bzw. KE2 bewerkstelligt werden, was im einzelnen in dem genannten Patent beschrieben ist. Hierzu werden Informationen durch den zentralen Prozessor ZW1 bzw. ZW2 (zentrales Steuerwerk) von den Anschlußgruppen, zum Beispiel LTG1 und weiteren, hereingeholt sowie in umgekehrter Richtung zu ihnen hin abgegeben. Hierbei wirken dezentrale Steuereinrichtungen GP1, GP2 und weitere ihresgleichen in den Anschlußgruppen in bekannter Weise mit. Für diesen Informationsaustausch werden die Anschlußgruppen und die Anschlußeinheiten in ihnen adressiert angesteuert.

Von den beiden zentralen Koppelfeldern K1 und K2 und den beiden zentralen Prozessoren ist jeweils ein Koppelfeld zum Beispiel K1 und ein zentraler Prozessor, zum Beispiel ZW1, in Betrieb, während das andere Koppelfeld und der andere Prozessor für den Fall einer notwendig werdenden Ersatzschaltung zur Verfügung stehen. Zur Vereinfachung der weiteren allgemeinen Beschreibung ist deshalb vorläufig immer nur vom zentralen Koppelfeld K1 und vom zentralen Prozessor ZW1 die Rede.

Den vom zentralen Prozessor ZW1 an die genannten Anschußgruppen zu übertragenden Informationen, die auch Abrufbefehle zum Abruf von den Anschlußgruppen bzw. von den Anschlußeinheiten zum zentralen Steuerwerk zu übertragenden Informationen, zum Beispiel Wahlinformationen, sein können, ist jeweils eine die betreffende Anschlußeinheit bezeichnende Adresse vorangestellt. Ist nun eine Anschlußeinheit vom zentralen Prozessor ZW1 anzusteuern zwecks Übertragung einer Information (gegebenenfalls Abrufbefehl) von diesem an jene, so überträgt dasselbe die Adresse und die Information sukzessive nacheinander zunächst zu einer Eingabe-Ausgabe-Einrichtung G1 (in "telcom report": IOP). Diese nimmt beide zunächst auf und speichert sie.

Wie in der zuvor genannten Patentschrift erläutert ist, bestehen zwischen der Eingabe-Ausgabe-Einrichtung G1 einerseits und jeder der Anschlußgruppen, und zwar ihren dezentralen Steuereinrichtungn, zum Beispiel GP1, GP2, andererseits über die Zeitmultiplex-Leitungen L1/1 bzw. L2/1, und zwar über jeweils einen Kanal pro Zeitmultiplexleitung, sowie über das Koppelfeld K1 und über Puffereinrichtungen MB1/ML1 Datenverbindungen. Hat nun die Eingabe-Ausgabeeinrichtung eine Information nebst Adresse vom zentralen Steuerwerk ZW1 über den Weg z1 empfangen, so führt sie von dieser Adresse einen ersten Adressenteil unter anderem einem Adressen-Signalkanal-Umsetzer U1/U2 zu. Dieser erste Adressenteil entspricht der jeweiligen Anschlußgruppe und damit der ihr zugeordneten Datenverbindung über Puffereinrichtung MB1 und Koppelfeld K1. Der genannte Umsetzer U11/U12 gibt eine dem ersten Adressenteil entsprechende Steuerinformation ab, die er über den Steuerweg u1 einem elektronischen Wähler W1 zuführt, welcher dadurch auf den betreffenden Signalkanal (über MB1 verlaufend) eingestellt wird. Dadurch ist die Eingabe-Ausgabe-Einrichtung G1 über diesen mit der dezentralen Steuereinrichtung, zum Beispiel GP1, der betreffenden Anschlußgruppe, zum Beispiel LTG1, verbunden und überträgt nun zu dieser die Information nebst vollständiger Adresse, das heißt einschließlich erstem Adressenteil.

Es ist eine größere Anzahl von einem Anschluß von verschiedenen Verkehrsrichtungen zugeordneten Zeitmultiplex-Verbindungsleitungen dienenden Anschlußgruppen vorgesehen, von denen die beiden Anschlußgruppen LTG1 und LTG2 auszugsweise dargestellt sind. Bedeutung, Aufgaben und Funktionen dieser Anschlußgruppen sind in der angegebenen Zeitschrift sehr ausführlich beschrieben, wovon im vorliegenden Falle als von bekannten Tatsachen ausgegangen wird.

Wie aus der genannten Zeitschrift weiterhin hervorgeht, enthält jede der Anschlußgruppen jeweils eine Mehrzahl von Anschlußeinheiten. Diese dienen in bekannter Weise dem Anschluß von Teilnehmerleitungen, Verbindungsleitungen oder Übertragungssystemen mit verbindungsindividuell belegbaren Kanälen. Es gibt verschiedene Arten von Anschlußeinheiten, zum Beispiel solche für Analog-Teilnehmerleitungen, andere für Digital-Teilnehmerleitungen, andere für Analog-Verbindungsleitungen und dergleichen. Ebenso gibt es Anschlußeinheiten, die dem Anschluß jeweils einer Zeitmultiplex-Verbindungsleitung dienen, welche bekanntlich eine größere Anzahl von zum Beispiel vierundzwanzig oder dreißig verbindungsindividuell belegbaren PCM-Kanälen umfassen kann. Bekanntlich handelt es sich hierbei genaugenommen um jeweils ein Kanalpaar pro Verbindung, wobei jeweils ein Kanal für die eine Übertragungsrichtung und der andere für die andere Übertragungsrichtung vorgesehen ist.

In der genannten Zeitschrift ist im einzelnen beschrieben, welchem Zweck die genannten Anschlußeinheiten dienen. Eine Anschlußeinheit ist bei Analog-Teilnehmerleitungen bzw. Analog-Verbindungsleitungen jeweils für eine Mehrzahl von Leitungen vorgesehen. Anschlußeinheiten für zeitmultiplex betriebene Übertragungs-Systeme, die jeweils eine größere Anzahl von Kanalpaaren umfassen (siehe oben), sind so aufgebaut, daß an eine Anschlußeinheit ein Übertragungssystem mit vierundzwanzig oder dreißig Kanalpaaren angeschlossen ist. In der genannten Zeitschrift ist ferner beschrieben, daß in einer Anschlußgruppe, die mit Anschlußeinheiten für Zeitmultiplex-Übertragungssysteme bestückt ist, insgesamt vier oder fünf solche Anschlußeinheiten vorgesehen sind. Ferner ist in der genannten Zeitschrift angegeben, daß innerhalb einer Anschlußgruppe Anschlußeinheiten mit einer Zeitmultiplex-Koppeleinrichtung der betreffenden Anschlußgruppe verbunden und über diese mit Kanälen des der betreffenden Anschlußgruppe entsprechenden Zeitmultiplex-Einganges und des entsprechenden Zeitmultiplex-Ausganges des zentralen Koppelfeldes verbindbar sind.

Bei dieser zahlenmäßigen Zuordnung geht es unter anderem immer auch darum, daß die Verkehrsbelastungen auf den verschiedenen Teilabschnitten der Verbindungswege möglichst gut aneinander angepaßt sind. Praktisch bedeutet dies, daß die Anzahl von Kanalpaaren, die die an die Anschlußeinheiten einer Anschlußgruppe angeschlossenen Zeitmultiplex-Verbindungsleitungen (PCM-Übertragungssysteme), von denen jedes einer anderen Verkehrsrichtung zugeordnet sein kann, die aber auch zu zweit oder zu mehreren jeweils gemeinsam ein und derselben Verkehrsrichtung zugeordnet sein können) insgesamt umfassen, etwa gleich der Anzahl von Kanalpaaren ist, die diejenige Zeitmultiplex-Leitung umfaßt, die die betreffende Anschlußgruppe mit dem zentralen Koppelfeld verbindet. So mögen also die Übertragungssysteme 1u1 bis 1u4 in Figur 2 etwa die gleiche Anzahl von Kanalpaaren aufweisen, wie die Zeitmultiplex-Leitung L1/1.

Da es nun vorkommen kann, daß die dezentralen Steuereinrichtungen (GP), Teilkoppelfelder (GS) oder Zeitmultiplex-Leitungen störungsbedingt ausfallen können, was also auch für die Zeitmultiplex-Leitungen L1/1, L1/2, L2/1 und L2/2 zutrifft, würde dies zur Folge haben, daß auch die Zeitmultiplex-Übertragungssysteme, die jeweils an die Anschlußeinheiten der betreffenden Anschlußgruppe angeschlossen sind, ebenfalls sämtlich nicht mehr für eine Verbindungsherstellung verfügbar sind. Da in der Vermittlungstechnik bei den vorgegebenen Werten und Daten bezüglich der Anzahlen von Kanalpaaren pro Verkehrsrichtung häufig nur ein einziges Übertragungssystem pro Verkehrsrichtung vorgesehen zu werden braucht, würde bei Ausfall einer dezentralen Steuereinrichtung, eines Teilkoppelfeldes oder der eine Anschlußgruppe mit dem zentralen Koppelfeld verbindenen Zeitmultiplex-Leitung auch das betreffende einzige Übertragungssystem pro Verkehrsrichtung ausfallen. Gleiches gilt bei Ausfall der dezentralen Steuereinrichtung zum Beispiel GP1, einer anschlußgruppe, zum Beispiel LTG1.

Eine solche unvorteilhafte Möglichkeit wird durch die Maßnahme ausgeschlossen, daß jeweils zwei Anschlußgruppen paarweise einander zugeordnet sind. Was diesbezüglich für die beiden in der Zeichnung auszugsweise dargestellten Anschlußgruppen LTG1 und LTG2 gilt, gilt ebenso für alle weiteren Anschlußgruppen mit Anschlußeinrichtungen, an die PCM-Übertragungssysteme in der angegebenen Weise angeschlossen sind. Weiterhin ist vorgesehen, daß die Anschlußeinrichtungen 1DIU1 bis 1DIU4 2DIU1 bis 2DIU4 jeder dieser beiden Anschlußgruppen LTG1 und LTG2, die im Normalbetrieb mit der Zeitmultiplex-Koppeleinrichtung Gs1 bzw. Gs2 ihrer eigenen Anschlußgruppe LTG1 bzw. LTG2 verbunden sind, im Notbetrieb einer dieser beiden Anschlußgruppen, zum Beispiel LTG2, zu der ein Teilkoppelfeld bildenden Zeitmultiplex-Koppeleinrichtung, zum Beispiel GS1, der jeweils anderen Anschlußgruppe, zum Beispiel LTG1 umschaltbar sind. Hierzu sind Umschalter 1d1 bis 1d4 und 2d1 bis 2d4 vorgesehen. Diese sind in der Zeichnung in der dem Normalbetrieb entsprehenden Ruhelage dargestellt. Sie werden bei einem Wechsel vom Normalbetrieb zum Notbetrieb aus ihrer dargestellten Ruhelage in ihre Arbeitslage umgeschaltet. Die Notbetriebssituation besteht, wenn bei einer Anschlußgruppe störungsbedingt ein Ausfall der oben angegebenen Art eintritt.

Werden nun die Umschalter 2d1 bis 2d4 bei einem Übergang von der Normalbetriebs-Situation in die Notbetriebs-Situation störungsbedingt aus ihrer dargestellten Ruhelage in ihre Arbeitslage umgeschaltet, so sind von diesem Zeitpunkt an die Anschlußeinheiten 2DIU bis 2DIU4 der Anschlußgruppe LTG2 mit der Zeitmultiplex-Koppeleinrichtung GS1 der Anschlußgruppe LTG1 verbunden. Infolgedessen können bei einem Ausfall der Zeitmultiplex-Leitung L2 die PCM-Übertragungssysteme 2u1 bis 2u4 mit ihren verbindungsindividuell belegbaren Kanälen weiterhin betrieben werden. Jedes dieser PCM-Übertragungssysteme kann einzeln einer eigenen Verkehrsrichtung zugeordnet sein. Es können auch zwei oder mehr PCM-Übertragungssysteme einer Verkehrsrichtung zugeordnet sein, das heißt, sie können also in vermittlungstechnischer Hinsicht ein gemeinsames Bündel von Kanalpaaren bilden.

Wie bereits weiter oben erwähnt wurde, werden die Verbindungen über das zentrale Koppelfeld K1 hergestellt. Hierbei wirkt der zentrale Prozessor ZW1 mit. In dem zentralen Prozessor sind die Anschlußgruppen, die in ihnen jeweils enthaltenen Anschlußeinheiten sowie die über jede derselben geführten Kanalpaare mit Hilfe von Adressen ansteuerbar. Es kann nun vorgesehen sein, daß jede der Anschlußeinheiten sowohl mit Hilfe einer Normalbetriebs-Adresse als auch mit Hilfe einer Notbetriebs-Adresse vom zentralen Prozessor her ansteuerbar ist. Diese Normalbetriebs-Adressen und Notbetriebs-Adressen sind also verwendbar nach betriebsgemäßem jeweiligem Bedarf. Es ist also vorgesehen, daß die Anschlußeinheiten, die mit PCM-Übertragungssystemen beschaltet sind, von dem zentralen Prozessor mittels jeweils einer Normalbetriebs-Adresse und jeweils einer Notbetriebs-Adresse ansteuerbar sind, und daß bei Eintritt einer Betriebsstörung in einer Anschlußgruppe, z.B. LTG2, bzw. deren Gruppensteuereinrichtung, z.B. GP2, die beim Normalbetrieb derselben im zentralen Prozessor gesperrten Notbetriebs-Adressen der betreffenden Anschlußeinheiten, z.B. 2DIU1 bis 2DIU4, entsperrt und stattdessen die Normalbtriebs-Adressen dieser Anschlußeinheiten gesperrt werden. Auf nicht im einzelnen dargestellte Weise wird also dem Zentralen Prozessor gemeldet, daß eine Anschlußgruppe, z.B. LTG2, vom Normalbetrieb in den Notbetrieb übergeht. Aufgrund dieser Meldung nimmt der zentrale Prozessor den zuvor angegebenen Vorgang der Entsperrung der Notbetriebs-Adressen der betreffenden Anschlußeinheiten sowie der Sperrung der Normalbetriebs-Adressen dieser Anschlußeinheiten vor. Dies gilt in gleicher Weise auch für Ansteuer-Adressen der Kanalpaare, die über die betreffenden Anschlußeinheiten geführt sind. In diesem Zusammenhang ist außerdem vorgesehen, daß die Anschlußeinheiten, zum Beispiel 2DIU1 bis 2DIU4 von dem zentralen Prozessor mittels der Normalbetriebs-Adresse über deren zugeordnete Anschlußgruppe, zum Beispiel LTG2, direkt und mittels der Notbetriebs-Adresse über die jeweils andere Anschlußgruppe, zum Beispiel LTG1 ansteuerbar sind.

In der gleichen Weise, wie die zuvor beschriebene Umschaltung der Verbindungswege (die gesamten Kanalpaare) mittels der Umschalter 2d1 bis 2d4 erfolgt, wird auch die zentrale Taktversorgung der betreffenden Anschlußeinheiten beim Übergang vom Normalbetrieb in den Notbetrieb von der zugeordneten Anschlußgruppe zu der jeweils anderen Anschlußgruppe umgeschaltet. Dadurch ist sichergestellt, daß die Anschlußeinheiten mit derjenigen Anschlußgruppe taktsynchron laufen, zu der hin die jeweilige Umschaltung erfolgt ist. In der gleichen Weise kann auch die Versorgung mit den erforderlichen Betriebsspannungen für die betreffenden Anschlußeinheiten von derjenigen Anschlußgruppe, die vom Normalbetrieb in den Notbetrieb übergegangen ist, zu der jeweils anderen Anschlußgruppe hin umgeschaltet werden. Günstiger noch ist es, die Einrichtungen für die Betriebsspannungsversorgung redundant, das heißt ausfallsicher auszuführen, zum Beispiel zweifach für alle Anschlußeinheiten der beiden Anschlußgruppen.

Teilweise abweichend von dem zuvor Beschriebenen kann auch vorgesehen sein, daß die Anschlußeinheiten von dem zentralen Prozessor über den Anschlußgruppen zugeordnete Signalkanäle mittels jeweils einer Adresse ansteuerbar sind, die einen die jeweilige Anschlußgruppe bezeichnenden ersten Adressenteil und einen die jeweilige Anschlußeinheit innerhalb jener bezeichnenden zweiten Adressenteil umfaßt. Dies wurde bereits erwähnt. Mit Hilfe des ersten Adressenteils der Adresse der betreffenden Anschlußeinheit wird jeweils diejenige Anschlußgruppe angesteuert, zu der die betreffende Anschlußeinheit gehört. Die Ansteuerung der Anschlußgruppe erfolgt in der angegebenen Weise dadurch, daß anhand des ersten Adressenteils eine Einstellinformation im Adressen-Signal-Umsetzer U11/U12 gebildet wird, die über den Steuerweg u1 dem elektronischen Wähler W1 zugeführt wird, wodurch die Eingabe-Ausgabe-Einrichtung G1 über die Puffereinrichtung MB1 mit demjenigen über das Koppelfeld K1 im durchgeschalteten Zustand bereitgehalten Signalkanal verbunden wird, der über eine Zeitmultiplexleitung, zum Beispiel L1/1 zu der betreffenden Anschlußgruppe hin führt. Es ist also ein Adressen-Signalkanal-Umsetzer G1 im zentralen Prozessor vorgesehen, der bei Vorliegen einer Information für eine Anschlußeinheit aus der der Information beigefügten Adresse anhand deren erstem Adressenteil eine von dem Prozessor zur Ansteuerung des betreffenden Signalkanals verwendete Signalkanalnummer abgibt. Diese Signalkanalnummer bezeichnet also den zuvor genannten betreffenden Signalkanal. Diese Signalkanalnummer dient als Einstellinformation, die über den Signalweg u1 zu dem genannten elektronischen Wähler W1 hin zu dessen Einstellung auf den betreffenden Signalkanal weitergegeben wird. Dieser elektronische Wähler kann in jeder beliebigen Weise auch als Koppler ausgebildet sein.- Der Adressen-Signalkanal-Umsetzer G1 im zentralen Prozessor ZW1 kann selbstverständlich auch räumlich gesondert von diesem (wie in Figur 1 dargestellt) vorgesehen sein, kann aber auch Bestandteil desselben sein. Er dient im übrigen in an sich bekannter Weise der Abwicklung der Eingabeprozeduren und Ausgabeprozeduren des zentralen Prozessors ZW1.

Wie bereits ausgeführt wurde, wird bei jeweiliger Ansteuerung eines Signalkanals zwecks Ansteuerung der betreffenden Anschlußgruppe die genannte Adresse sowie die Information über diesen Signalkanal übertragen. Adresse und Information werden über den Signalkanal zu der betreffenden Anschlußgruppe und hier über die erwähnte Zeitmultiplex-Koppeleinrichtung, zum Beispiel GS1, zunächst zu der betreffenden dezentralen Steuereinrichtung, zum Beispiel GP1, übertragen. Diese erkennt anhand der Adresse, und zwar insbesondere anhand des darin enthaltenen zweiten Adressenteils, zu welcher der Anschlußeinheiten die betreffende Information weiterzuleiten ist.

In dem zuvor beschriebenen Zusammenhang sei zunächst davon ausgegangen, daß der weiter oben bereits erwähnte Adressenteil diejenige Anschlußgruppe bezeichnet, zu der hin Adresse und Information in der zuvor beschriebenen Weise übertragen wurden. Der zweite Adressenteil gibt nun an, welche der Anschlußeinheiten innerhalb der betreffenden Anschlußgruppe, zum Beispiel LTG1, diejenige ist, zu welcher hin die betreffende Information weiterzuleiten ist. Es sei angenommen, daß dies die Anschlußeinheit 1DIU2 sei. Weiterhin sei angenommen, daß sich die betreffende Anschlußgruppe, zum Beispiel LTG1 im Normalbetriebszustand befindet. In diesem Falle ist also der Umschalter 1d2 in der in Figur 1 dargestellten Ruhelage. Die Anschlußeinheit 1DIU2 ist folglich in diesem Betriebszustand über die Ruheseite des Umschalters 1d2 mit der Zeitmultiplex-Koppeleinrichtung GS1 der Anschlußgruppe LTG1 verbunden.

Wie zuvor erläutert, hat die dezentrale Steuereinrichtung GP1 mit der Information, die für die Anschlußeinheit 1DIU2 bestimmt ist, auch die Adresse empfangen und zwischengespeichert, die aus einem ersten, die Anschlußgruppe LTG1 bezeichnenden Adressenteil und einem zweiten, die Anschlußeinheit 1DIU2 in ihr bezeichnenden zweiten Adressenteil umfaßt. Anhand des ersten Adressenteils erkennt die dezentrale Steuereinrichtung GP1, daß die betreffende Information an eine Anschlußeinheit weiterzuleiten ist, die zu der gleichen Anschlußgruppe LTG1 gehört. Anhand des zweiten Adressenteils erkennt die dezentrale Steuereinrichtung GP1, daß die Informationen zu der Anschlußeinheit 1DIU2 weiterzuleiten ist. Aufgrund dessen steuert die dezentrale Steuereinrichtung GP1 die Zeitmultiplex-Koppeleinrichtung GS1 so, daß ein Übertragungsweg von der dezentralen Steuereinrichtung GP1 zur Anschlußeinheit 1DIU2 durchgeschaltet wird, der also über die Ruheseite des Umschalters 1d2 verläuft.

In Abwandlung von dem zuvor Beschriebenen kann auch vorgesehen werden, daß die dezentrale Steuereinrichtung GP1 in dem angegebenen Zusammenhang nicht auch die Information mit der betreffenden Adresse empfängt, sondern lediglich die Adresse selber, und daß sie anhand derselben einen direkten Übertragungsweg für die Information von dem über die Zeitmultiplex-Leitung L1/1 verlaufenden Signalkanal über die Zeitmultiplex-Koppeleinrichtung GS1 und die Ruheseite des Umschalters 1d2 zur Anschlußeinrichtung 1DIU2 durchschaltet. In diesem Falle wird also die Adresse über den Signalkanal in der dezentralen Steuereinrichtung GP1 empfangen und hier zur Durchschaltung eines Direktweges von dem genannten Signalkanal zu der betreffenden Anschlußeinheit verwendet. In diesem Falle würde also eine Zwischenspeicherung der betreffenden Information in der dezentralen Steuereinrichtung GP1 entfallen.

In diesem Zusammenhang ist noch die spezielle Notbetriebssituation zu erläutern. Wie bereits erwähnt wurde, kann eine störungsbedingte Notbetriebssituation dadurch verursacht sein, daß der Signalkanal zwischen einer Anschlußgruppe und dem zentralen Prozessor nicht benutzbar ist, oder daß die dezentrale Steuereinrichtung, zum Beispiel GP2, und/oder die Zeitmultiplex-Koppeleinrichtung, zum Beispiel GS1, der betreffenden Anschlußgruppe nicht die erforderliche Funktionsfähigkeit aufweist. Dies ist für den zentralen Prozessor anhand der kontinuierlichen Durchführung eines Überwachungsverfahrens erkennbar, das im einzelnen in der bereits genannten Zeitschrift "telcom report", sowie in der deutschen Offenlegungsschrift 3 106 903 im einzelnen beschrieben ist. Erkennt der zentrale Prozessor eine Betriebsstörung, die zum Beispiel die Anschlußgruppe LTG2 betrifft, so erfolgt der gesamte weitere Datenaustausch zwischen zentralem Prozessor ZW1 und den Anschlußeinheiten 2DIU1 bis 2DIU4 der von der Betriebsstörung betroffenen Anschlußgruppe LTG2 für die Dauer der Betriebsstörung über die Anschlußgruppe LTG1. Hierzu werden sämtliche Umschalter in der betroffenen Anschlußgruppe LTG2 aus ihrer dargestellten Ruhelage in ihre Arbeitslage umgelegt. Dies kann auf zweierlei Weise erfolgen. Es kann vorgesehen sein, daß die aufgetretene Betriebsstörung innerhalb der von ihr betroffenen Anschlußgruppe selber erkannt wird. Dies kann dadurch geschehen, daß der der ständigen Überprüfung der vollen Funktionsfähigkeit jeder der Anschlußgruppen dienende Datenaustausch mit dem zentralen Prozessor gemäß der zuletzt genannten deutschen Offenlegungsschrift nicht mehr stattfindet, und daß dies innerhalb der betreffenden Anschlußgruppe erkannt wird. Aufgrund dessen kann die erwähnte Betätigung der Umschalter 2d1 bis 2d4 innerhalb der betreffenden Anschlußgruppe durch ihre dezentrale Steuereinrichtung, zum Beispiel GP2 selber vorgenommen werden. Jedoch kann auch vorgesehen sein, daß der zentrale Prozessor ZW1 die die Anschlußgruppe LTG2 betreffende Betriebsstörung erkennt, und daß er eine entsprechende Information hierüber an die dezentrale Steuereinrichtung GP1 der paarweise zugeordneten Anschlußgruppe LTG1 überträgt, und daß diese dann einen Befehl zur Betätigung der genannten vier Umschalter in der Anschlußgruppe LTG2 an diese überträgt.

Im Zustand der die Anschlußgruppe LTG2 betreffenden Betriebsstörung sind also die Umschalter 2d1 bis 2d4 betätigt. Dementsprechend sind die Anschlußeinheiten 2DIU1 bis 2DIU4 mit der Zeitmultiplex-Koppeleinrichtung GS1 der Anschlußgruppe LTG1 verbunden.

Erkennt der zentrale Prozessor ZW1 die die Betriebsstörung der Anschlußgruppe LTG2 betreffende Funktionsstörung, erkennt er also, daß der weitere Datenaustausch mit den entsprechenden Anschlußeinheiten 2DIU1 bis 21DIU4 über den Signalkanal der Anschlußgruppe LTG1 abzuwickeln ist, so gibt er eine entsprechende Information auch an den Adressen-Signal-Umsetzer U11/U12 in der Eingabe-Ausgabe-Einrichtung G1. Durch diese Information wird die die Anschlußeinheiten 2DIU1 bis 2DIU4 in der Anschlußgruppe LTG2 betreffende Signalkanalnummer vorübergehend geändert. Praktisch bedeutet dies, daß für die Dauer der Betriebsstörung der Anschlußgruppe LTG2 bei Ansteuerung einer ihrer Anschlußeinheiten der Adressen-Signalkanal-Umsetzer bei Erhalt einer Adresse mit einem die Anschlußgruppe LTG2 bezeichnenden ersten Adressenteil eine Steuerinformation über den Steuerweg u1 zum elektronischen Wähler W1 hin abgibt, die bewirkt, daß in diesem Falle anstelle des Signalkanals der Anschlußgruppe LTG2 vielmehr der Signalkanal der Anschlußgruppe LTG1 durch den elektronischen Wähler W1 angesteuert wird. Der zentrale Prozessor gibt also zur Ansteuerung einer Anschlußeinheit 2DIU1 bis 2DIU4 im Zustand der Betriebsstörung der Anschlußgruppe LTG2 die Adresse und die Information für die betreffende Anschlußgruppe ebenso, wie im Zustand des Normalbetriebes der Anschlußgruppe LTG2 ab. Im Adressen-signalkanal-Umsetzer U11/U12 ist für die Dauer der Betriebsstörung der Anschlußgruppe LTG2 festgehalten, daß anstelle ihres Signalkanales vielmehr der Signalkanal der Anschlußgruppe LTG1 anzusteuern ist. Die die Betriebsstörung der Anschlußgruppe LTG2 betreffende Umleitung der Informationen für ihre Anschlußeinheiten erfolgt also in der Eingabe-Ausgabe-Einrichtung mit Hilfe des elektronischen Wählers W1 aufgrund der vorläufigen Änderung der im Adressen-Signalkanal-Umsetzer U11/U12 gespeicherten Signalkanalnummern, die als Steuerinformationen fallweise aus jenem abgerufen und zur Steuerung des Wählers W1 zugeführt werden.

Wird nun eine Information samt der zu ihr gehörenden, aus erstem Adressenteil und zweitem Adressenteil bestehenden Adresse störungsbedingt zur Anschlußgruppe LTG1 geschickt, obwohl die betreffende Information für eine der Anschlußeinheiten 2DIU1 bis 2DIU4 bestimmt ist, so erkennt die dezentrale Steuereinrichtung GP1 anhand des ersten Adressenteils zunächst, daß die betreffende Information für eine Anschlußeinheit der jeweils anderen Anschlußgruppe bestimmt ist. Anhand des zweiten Adressenteils erkennt diese dezentrale Steuereinrichtung die jeweilige Anschlußeinheit, für die die Information bestimmt ist. Aufgrund des ersten Adressenteils und aufgrund des zweiten Adressenteils leitet die dezentrale Steuereinrichtung GP1 die betreffende Information zu derjenigen Anschlußeinheit der anderen Anschlußgruppe LTG2 weiter, für die sie bestimmt ist. Hierzu schaltet die dezentrale Steuereinrichtung GP1 einen Übertragungsweg über die Zeitmultiplex-Koppeleinrichtung GS1 durch, über den die Information dann übertragen wird. Dies erfolgt über einen entsprechenden Anschluß der Zeitmultiplex-Koppeleinrichtung GS1 und die Arbeitsseite des betreffenden Umschalters, zum Beispiel 2d2. Auch in diesem Falle kann die betreffende Information in der dezentralen Steuereinrichtung GP1 zwischengespeichert werden und dann von ihr aus zu der betreffenden Anschlußeinheit, zum Beispiel 2DIU2 hin übertragen werden, oder es kann in der oben beschriebenen Weise vorgesehen sein, daß auch in dem hier beschriebenen Betriebsfall ein Direktweg von dem über die Zeitmultiplexleitung L1/1 verlaufenden Signalkanal über die Zeitmultiplex-Koppeleinrichtung GS1 und über den in Arbeitslage befindlichen Umschalter 2d2 zur Anschlußeinrichtung 2DIU2 durchgeschaltet wird.

Auf die zuvor beschriebene Weise können sowohl Informationen vom zentralen Prozessor zu jeder der Anschlußeinheiten, als auch in umgekehrter Richtung übertragen werden. Im letzterem Falle kann die vom zentralen Prozessor zur betreffenden Anschlußeinheit übertragene Information eine Abrufinformation sein, aufgrund deren in umgekehrter Richtung dann die zu übertragende und abgerufene Information von der betreffenden Anschlußeinrichtung zum zentralen Prozessor hin übertragen wird. Auf die gleiche Weise kann auch die Informationsübertragung von Anschlußgruppe zu Anschlußgruppe erfolgen, wie sie in der deutschen Patentschrift 3 128 365 beschrieben ist. Auf diese Weise können also Informationen von einer Anschlußeinheit einer Anschlußgruppe zu einer Anschlußeinheit einer anderen Anschlußgruppe übertragen werden, wobei diese Informationen vom zentralen Prozessor ZW1 nicht selber aufgenommen werden müssen, sondern nach Ankunft von einer Anschlußeinheit in der Eingabe-Ausgabe-Einrichtung G1 von hier aus direkt zu der betreffenden Anschlußeinrichtung übertragen werden, für die sie bestimmt sind. Dies ist möglich durch die in der zuletzt angegebenen Patentschrift beschriebene Weiterleitung der Informationen innerhalb der Eingabe-Ausgabe-Einrichtung G1.

Wie bereits aus dem bisherigen Teil der Beschreibung hervorgeht, ist ein der Verbindungsdurchschaltung dienendes zentrales Koppelfeld K1/K2 zweifach vorgesehen. Ebenso zweifach ist ein zentraler Prozessor ZW1/ZW2 vorgesehen, wobei das eine Koppelfeld, zum Beispiel K1 und der eine zentrale Prozessor, zum Beispiel ZW1, einander zugeordnet sind, was auch für das andere Koppelfeld und den anderen zentralen Prozessor gilt. Der zentrale Prozessor dient in bekannter Weise unter anderem der Steuerung seines zentralen Koppelfeldes sowie einer hierfür erforderlichen Schaltkennzeichenverarbeitung. Jeder der beiden Prozessoren ist in bekannter Weise programmgesteuert. Die Dopplung von Koppelfeld und zentralem Prozessor dient in bekannter Weise zur Ersatzschaltemöglichkeit (stand-by-Betrieb). Für den Fall einer Funktionsstörung und/oder eines schaltungstechnischen Fehlers in einem der beiden Koppelfelder und/oder in einem der beiden zentralen Prozessoren und/oder in einem von ihnen jeweils zugeordneten weiteren Aggregaten besteht in bekannter Weise die Möglichkeit, daß der Vermittlungsbetrieb statt mit dem einen zentralen Koppelfeld, zum Beispiel K1, und dem einen der beiden zentralen Prozessoren, zum Beispiel ZW1, vielmehr mit dem anderen der beiden Koppelfelder, zum Beispiel K2, und dem anderen der beiden zentralen Prozessoren, zum Beispiel ZW2 fortgesetzt wird - und umgekehrt -.

Ebenfalls wurde bereits erläutert - wie auch bereits durch die genannten Literaturstellen bekannt ist -, daß eine Mehrzahl von dezentralen Anschlußgruppen mit je einem Teilkoppelfeld zum außenseitigen Anschluß von Verbindugns- und/oder Teilnehmerleitungen, bzw. entsprechenden Kanälen, und mit einer dezentralen programmierbaren Steuereinrichtung zur Schaltkennzeichenaufnahme von diesen Leitungen, zur Schaltkennzeichenvorverarbeitung und -weiterleitung an den betreffenden zentralen Prozessor und zur Schaltkennzeichenaussendung auf die genannten Leitungen, bzw. Kanäle, ausgestattet ist. So weist zum Beispiel die Anschlußgruppe LTG1 das Teilkoppelfeld GS1 und die dezentrale Steuereinrichtung GP1 auf. An das Teilkoppelfeld GS1 sind außenseitig die Einrichtungen 1DIU1 bis 1DIU4 angeschlossen, die bereits weiter oben erwähnt wurden. Innenseitig sind an das Teilkoppelfeld die beiden Zeitmultiplexleitungen L1/1 und L1/2 angeschlossen, die zu den beiden zentralen Koppelfeldern K1 und K2 führen. Jede dieser Zeitmultiplexleitungen umfaßt - wie bereits ebenfalls weiter oben erläutert wurde -eine Anzahl von zum Beispiel dreißig Kanalpaaren, wobei jeweils ein Kanalpaar einen Übertragungskanal in der einen Übertragungsrichtung und einen Übertragungskanal in der anderen Übertragungsrichtung enthält. Jedes dieser Kanalpaare bildet eine Linkleitung. Folglich ist jedes Teilkoppelfeld, zum Beispiel GS1, über zwei Gruppen von Linkleitungen gruppenweise getrennt mit Koppelfeldanschlüssen einerseits des einen und andererseits des anderen der beiden parallel vorgesehenen Koppelfelder verbunden.

Ebenfalls wurde bereits erwähnt - was auch aus den weiter oben genannten Literaturstellen zu entnehmen ist -, daß für einen der Schaltkennzeichenbehandlung dienenden Datenaustausch zwischen den dezentralen Steuereinrichtungen einerseits und dem jeweils betriebsbereiten Prozessor andererseits Datenverbindungen in betriebsbereiten Zustand gebracht bzw. in ihm gehalten werden. Bei dieser Schaltkennzeichenbehandlung handelt es sich darum, daß von Teilnehmern abgegebene Wahlinformationen sowie über bereits aufgebaute oder teilaufgebaute Verbindungswege eintreffende Schaltkennzeichen, die über die dezentralen Anschlußgruppen eintreffen, dem jeweiligen zentralen Prozessor nach einer Vorverarbeitung der jeweiligen dezentralen Steuereinrichtung zugeführt werden, wodurch dieser Einstellinformationen für sein zentrales Koppelfeld sowie Schaltkennzeichen und Steuerinformationen erarbeitet, die zur Aussendung über die betreffenden Verbindungen dem jeweiligen dezentralen Steuerwerk wieder zugeleitet werden und hier zur Aussendung kommen und/oder zur Anschaltung von Hörtonsignalen, Rufsignalen und dergleichen für die betreffenden Teilnehmer führen. Der für diese Schaltkennzeichenbehandlung dienende Datenaustausch zwischen jedem der dezentralen Steuerwerke einerseits und dem betreffenden zentralen Prozessor andererseits erfolgt über Datenverbindungen, die zwischen jeder der dezentralen Steuereinrichtungen einerseits über das jeweils in Betrieb befindliche Koppelfeld mit dem jeweils in Betrieb befindlichen Prozessor hergestellt und ständig in betriebsbereitem Zustand gehalten werden. Diese Datenverbindungen werden ähnlich wie Nachrichtenverbindungen über das zentrale Koppelfeld hergestellt. Sie verlaufen in der bereits angegebenen Weise über die Einrichtungen MB1 und G1, sofern das Koppelfeld K1 und der zentrale Prozesor ZW1 sich zur Zeit in Betrieb befindet.

Die genannten Datenverbindungen zwischen jeder der dezentralen Steuereinrichtungen jeder der Anschlußgruppen einerseits und dem jeweils in Betrieb befindlichen zentralen Prozessor dienen nicht nur für den genannten, zur Abwicklung der erwähnten Schaltkennzeichenbehandlung durchgeführten Datenaustausch, sondern diese Datenverbindungen dienen auch dazu, daß beim Inbetriebgehen eines zentralen Prozessors und des ihm zugeordneten zentralen Koppelfeldes, dieser zentrale Prozessor Programm- und Vermittlungs-Software an sämtliche dezentralen Steuereinrichtungen sämtlicher Anschlußgruppen überträgt. Dies wird auch als "Laden" bezeichnet und ist in großer Ausführlichkeit in der bereits gegenannten Zeitschrift "telcom report", Beiheft 1981, insbesondere Seite 19 ff beschrieben. Hierzu ist im Falle des vorliegenden beschriebenen Ausführungsbeispiels eine mit dem zentralen Prozessor, zum Beispiel ZW1, verbundene Eingabe-Ausgabe-Einrichtung, zum Beispiel G1, vorgesehen, an die mehrere Daten-Pufferspeichereinrichtungen, zum Beispiel MB1, angeschlossen sind; von jeder derselben führt eine Mehrzahl von Datenverbindungen über das betreffende Koppelfeld, zum Beispiel K1, zu den dezentralen Steuereinrichtungen der genannten Anschlußgruppen. Diese Daten-Pufferspeicher sind mit Link-Anschlüssen einzeln wie die Link-Leitungen mit Anschlüssen des Koppelfeldes fest verbunden. Wie bereits ausgeführt wurde, ist eine Link-Leitung und dementsprechend auch ein Link-Anschluß jeweils durch ein Kanalpaar realisiert. Die Kanalpaare gehören zu den an das Koppelfeld K1bzw. K2 angeschlossenen Zeitmultiplexleitungen.

Die für den Vermittlungsbetrieb erforderlichen und in den dezentralen Steuereinrichtungen zu speichernden vermittlungstechnischen Informationen, wie zum Beispiel Teilnehmeranschlußlage-Teilnehmerrufnummer-Zuordnungen, Teilnehmerberechtigungen und technischen Merkmale von angeschlossenen Verbindungsleitungen und dergleichen, sowie Programminformationen, die für die Abwicklung der vermittlungstechnischen Funktionen maßgebend sind, werden zunächst entsprechenden Speichern der beiden zentralen Prozessoren eingegeben und werden von hier aus beim Inbetriebgehen eines zentralen Prozessors zu den dezentralen Steuereinrichtungen der verschiedenen Anschlußgruppen übertragen und hier gespeichert. Diese Übertragung und Speicherung erfolgt pro Anschlußgruppe einzeln, das heißt für die dezentralen Steuereinrichtungen der verschiedenen Anschlußgruppen einzeln nacheinander. Der hierfür erforderliche Zeitaufwand bei Einschaltung einer Vermittlungsstelle ist im Vergleich zu den in Zusammenhang mit der Einrichtung einer Vermittlungsstelle erforderlichen gesamten Arbeiten verschwindend gering. Stärker fällt dieser Zeitaufwand jedoch ins Gewicht im Falle einer Ersatzschaltung des zentralen Prozessors und des zentralen Koppelfeldes. Für diesen Fall ist ebenso vorgesehen, die dezentralen Steuereinrichtungen der Anschlußgruppen mit den im zentralen Prozessor gespeicherten vermittlungstechnischen Informationen und Programminformationen zu laden, um mit Sicherheit einen völligen Gleichlauf zwischen diesen Informationen, die also einerseits im neu in Betrieb gehenden zentralen Prozessor und andererseits in den dezentralen Steuereinrichtungen gespeichert sind, zu gewährleisten. Hierdurch werden jegliche Abweichungen ausgeschlossen,die sonst entstehen könnten, bezüglich dieser vermittlungstechnischen Informationen und dieser Programminformationen, die also einerseits im in Betrieb gehenden zentralen Prozessor und andererseits in den dezentralen Steuereinrichtungen jeder der verschiedenen Anschlußgruppen gespeichert sind. Solche Abweichungen könnten zum Beispiel dadurch entstehen, daß zwischenzeitlich Änderungen an diesen vermittlungstechnischen Informationen und/oder Programminformationen vorgenommen werden, oder auch dadurch, daß in den dezentralen Steuereinrichtungen diese Informationen durch irgendwelche Störeinflüsse verfälscht worden sind. Solche Abweichungen werden aber mit Sicherheit ausgeschlossen durch ein erneutes Laden sämtlicher dezentraler Steuereinrichtungen mit den Programinformationen und den vermittlungstechnischen Informationen seitens des in Zusammenhang mit der vorgesehenen Ersatzschaltung neu in Betrieb gehenden zentralen Prozessors.

Um nun den Vorgang des beschriebenen Ladens der Programminformationen und der vermittlungstechnischen Informationen aus dem in Zusammenhang mit einer vorgesehenen Ersatzschaltung neu in Betrieb gehenden zentralen Prozessor in die dezentralen Steuereinrichtungen der verschiedenen Anschlußgruppen zeitlich abzukürzen, ist vorgesehen, daß jeweils zwei Anschlußgruppen paarweise einander zugeordnet sind, daß in jeder derselben zum außenseitigen Anschluß von Teilnehmer- und/oder Verbindungsleitungen dienenden und innerhalb der jeweiligen Anschlußgruppe im Normalbetrieb mit ihrem Teilkoppelfeld verbundene Anschlußeinheiten im Notbetrieb teilweise umschaltbar sind. Es wird also Gebrauch gemacht von der bereits weiter oben im einzelnen beschriebenen technischen Verfahrensweise, wobei die erläuterte Umschaltung vom Normalbetrieb auf den Notbetrieb bei sämtlichen Anschlußgruppen in die Wege geleitet wird. Dadurch werden also die Anschlußeinheiten jeweils einer ersten von zwei paarweiseeinander zugeordneten Anschlußgruppen zusätzlich an das Teilkoppelfeld der jeweils anderen, also einer jeweils zweiten Anschlußgruppe angeschaltet, was bei sämtlichen paarweise einander zugeordneten Anschlußgruppen gleichermaßen stattfindet. Dabei wird für die über die umgeschalteten Anschlußeinheiten verlaufenden Verbindungen die entsprechende Schaltkennzeichenbearbeitung sowie Teilkoppelfeld-Einstellung ebenfalls von der dezentralen Steuereinrichtung der jeweils anderen, also zweiten Anschlußgruppe durchgeführt.

In dieser Betriebssituation bedient also innerhalb von zwei paarweise einander zugeordneten Anschlußgruppen die dezentrale Steuereinrichtung nur einer derselben sämtliche Anschlußeinheiten, wie zum Beispiel Teilnehmeranschlußschaltungen, Mehrfachteilnehmeranschlußschaltungen, Verbindungsleitungsabschlußschaltungen, die auch Verbindungsleitungsmehrfachabschlußschaltungen sein können und dergleichen. In dieser Betriebssituation werden auch sämtliche Verbindungen, die über die Anschlußeinheiten beider Anschlußgruppe hergestellt werden, über das Teilkoppelfeld nur der einen der beiden Anschlußgruppen durchgeschaltet. Ausgehend davon, daß in dieser Betriebssituation die Anschlußeinheiten jeweils einer ersten dieser beiden Anschlußgruppen zusätzlich an das Teilkoppelfeld der jeweils anderen Anschlußgruppe angeschaltet werden, erfolgt also die gesamte Verbindungsherstellung über das Teilkoppelfeld der zweiten Anschlußgruppe mit Hilfe von ihrer dezentralen Steuereinrichtung. Dabei sind die beiden Anschlußgruppen an sich völlig gleichberechtigt, das heißt diese Umschaltung kann bezüglich dieser beiden Anschlußgruppen auch umgekehrt erfolgen. Die gesamte weitere Betriebsabwicklung erfolgt dann vorläufig in der gleichen Weise, wie in dem weiter oben detailliert beschriebenen Notbetrieb. In dieser Betriebssituation befinden sich sämtliche Anschlußgruppen gleichsam im Notbetrieb.

Nach Herstellung des Notbetriebszustandes ist die Hälfte sämtlicher dezentraler Steuereinrichtungen dem Vermittlungsbetrieb entzogen, ebenso auch die Hälfte sämtliche Teilkoppelfelder, und zwar jeweils eine dezentrale Steuereinrichtung und jeweils das ihm zugeordnete Teilkoppelfeld pro Paar von Anschlußgruppen.

Eine Ersatzschaltung eines der beiden zentralen Prozessoren durch den jeweils anderen zentralen Prozessor wird also noch während zunächst weiterlaufendem Betrieb des bis dahin in Betrieb befindlichen zentralen Prozessors dadurch vorbereitet, daß sämtliche paarweise einander zugeordneten Anschlußgruppen vom Normalbetrieb in den Notbetrieb übergeführt werden; ferner stellt der andere zentrale Prozessor Dantenverbindungen über das ihm zugeordnete andere Zentrale Koppelfeld zu den dezentralen Steuereinrichtungen aller ersten Anschlußgruppen her. Dies geschieht in der weiter oben bereits beschriebenen Weise. Diese Verbindungen werden also zu den dezentralen Steuereinrichtungen aller derjenigen Anschlußgruppen hergestellt, deren Anschlußeinheiten jeweils zum Teilkoppelfeld der paarweise zugeordneten anderen Anschlußeinheit umgeschaltet worden sind, also derjenigen Anschlußgruppen, deren dezentrale Steuereinrichtungen und deren Teilkoppelfelder in Zusammenheng mit der in vorbereitung befindlichen Ersatzschaltung dem normalen Vermittlungsbetrieb entzogen worden sind.

Über die zuvor beschriebenen neu hergestellten Datenverbindungen lädt nun der in Zusammenhang mit der bevorstehenden Ersatzschaltung neu in Betrieb gehende zentrale Prozessor die gesamten Programminformationen und die gesamten vermittlungstechnischen Informationen in die betreffenden dezentralen Steuereinrichtungen, bzw. in entsprechende Speicher derselben. Dieser zentrale Prozessor überträgt also anschließend nacheinander an die betreffenden dezentralen Steuereinrichtungen, die zur Zeit dem regulären Vermittlungsbetrieb entzogen sind, die für ihren erneuten Betriebsbeginn erforderliche Programm- und Vermittlungs-Software zwecks Speicherung derselben in ihnen. Dies geschieht seitens des in Zusammenhang mit der bevorstehenden Ersatzschaltung in Betrieb gehenden zentralen Prozessors bereits vorbereitend während einer Übergangszeit, in der der andere zentrale Prozessor noch den Vermittlungsbetrieb mit denjenigen dezentralen Steuereinrichtungen und Teilkoppelfeldern fortführt, die hierzu vom Normalbetrieb in den Notbetrieb übergeführt worden sind zwecks Vorbereitung der beabsichtigten Ersatzschaltung.

Sind die zuvor beschriebenen, eine Ersatzschaltung vorbereitenden Vorgänge des Ladens von Programminformationen und vermittlungstechnischen Informationen abgewickelt, so erfolgt die Ersatzschaltung. Dabei geht in bekannter Weise die Gesamtheit der zentralen Datenverarbeitungs- und Steuerfunktionen von dem einen zentralen Prozessor auf den anderen zentralen Prozessor über, wobei auch das eine zentrale Koppelfeld durch das andere zentrale Koppelfeld ersetzt wird. Dabei kann vorgesehen werden, daß bereits bestehende Verbindungen bestehen bleiben können bis zu ihrer Auslösung. Sämtliche neue Verbindungen werden dann mit Hilfe der neu geladenen dezentralen Steuereinrichtung hergestellt, und zwar über die ihnen jeweils zugeordneten Teilkoppelfelder. Die anderen dezentralen Steuereinrichtungen und die ihnen zugeordneten Teilkoppelfelder werden für weitere Verbindungsherstellungen nicht mehr benutzt. In diesem Zusammenhang erfolgt dann eine Umschaltung innerhalb der Anschlußgruppen mit Hilfe der in Figur 2 dargestellten Umschaltekontakte 1d1 bis 2d4. Anschließend wird der Vermittlungsbetrieb also fortgesetzt mit Hilfe derjenigen dezentralen Steuereinrichtungen, die bis zur erfolgten Ersatzschaltung dem normalen Vermittlungsbetrieb entzogen war und über die zugeordneten Teilkoppelfelder. Diejenigen dezentralen Steuereinrichtungen und zugeordneten Teilkoppelfelder, die bis zum Zeitpunkt der Ersatzschaltung den Vermittlungsbetrieb im Quasi-Notbetrieb fortgeführt haben, gehen zunächst außer Betrieb. Dann aber baut derjenige zentrale Prozessor, der in Zusammenhang mit der Ersatzschaltung in Betrieb gegangen ist, nacheinander auch Datenverbindungen zu allen denjenigen dezentralen Steuereinrichtungen auf, die in Zusammenhang mit der erfolgten Ersatzschaltung zunächst außer Betrieb gegangen sind. Anschließend lädt der zentrale Prozessor die erforderlichen Programminformationen und vermittlungstechnischen Informationen auch in die Speicher dieser dezentralen Steuereinrichtungen. Dies geschieht zeitlich eingestreut in die normalen Vermittlungsvorgänge. Nachdem der dezentrale Prozessor sämtliche dezentralen Steuereinrichtungen mit den erforderlichen Programminformationen und den betreffenden vermittlungstechnischen Informationen geladen hat, wird sukzessive nacheinander bei den paarweise einander zugeordneten Anschlußgruppen die Betriebsweise wieder vom Notbetrieb in den Normalbetrieb zurücküberführt.

Nachdem die Beschreibung des in den Zeichnungen auszugsweise dargestellen Ausführungsbeispieles der Erfindung eine Zeitmultiplex-Fernsprechvermittlungsanlage, in der die Erfindung angewendet ist, in allgemeineren Zusammenhängen beschrieben hat, wendet sie sich nun den erfindungswesentlichen Zusammenhängen in besonderer Weise zu.

Wie bereits ausgeführt wurde, ist im Notbetrieb eine Umschaltung innerhalb eines Anschlußgruppen-Paares vorgesehen. Zu dieser Umschaltung wurde ausgeführt, daß bei Eintritt einer Störung, z. B. in der Anschlußgruppe LTG2 (in deren Teilkoppelfeld oder in deren dezentraler Steuereinrichtung), die Anschlußeinheiten, z. B. 2DIU1 bis 2DIU4, dieser Anschlußgruppe mit Hilfe der betreffenden Umschalter, 2d1 bis 2d4, vom Teilkoppelfeld, z.B. GS2, der störungsbehafteten Anschlußgruppe, z. B. LTG2, zum Teilkoppelfeld, z. B. GS1, der Partner-Anschlußgruppe, z. B. LTG1, umgeschaltet werden. Eine solche Umschaltung kann nicht nur in einem störungsbedingten Notbetrieb der weiter oben beschriebenen Art vorgenommen werden, also lediglich für jeweils ein Anschlußgruppen-Paar (LTG1/LTG2), sondern auch für sämtliche vorhandenen Anschlußgruppen-Paare, und zwar zum Zwecke einer Vorbereitung der zuvor bereits ausführlich beschriebenen Ersatzschaltung eines der zentralen Prozessoren durch den jeweils anderen zentralen Prozessor. Wie weiter oben bereits ausgeführt wurde, werden bei einer solchen Ersatzschaltung die Umschalter LH1, LH2, LG1, und LG2 betätigt. Ist der zentrale Prozessor ZW1 in Betrieb, so befinden sich diese Umschalter in ihrer in fig. 2 dargestellten Lage. Ist der zentrale Prozessor ZW2 in Betrieb, so werden im Zusammenhang hiermit die zuletzt genannten Umschalter in ihre jeweils andere Schaltstellung gebracht. Dadurch wird erreicht, daß die Teilkoppelfelder GS1 und GS2 entweder mit dem Zentralkoppelfeld K1 oder mit dem Zentralkoppelfeld K2 verbunden sind.

Die beschriebene Umschaltung betrifft also unter anderem die Anschlußeinheiten, z. B. 2DIU1 bis 2DIU4, derjenigen Anschlußgruppe, z. B. LTG2, in deren Teilkoppelfeld, z. B. GS2, oder dezentralem Steuerwerk, z. B. GP2, eine Betriebsstörung eingetreten ist. Insoweit betrifft diese Umschaltung also die Verbingungswege zwischen den Anschlußeinheiten und den außenseitigen Teilkoppelfeldanschlüssen. Diese Umschaltung betrifft darüberhinaus aber auch die innenseitigen Teilkoppelfeldanschlüsse. Im Zusammenhang mit einer solchen Umschaltung werden mit Hilfe der Umschalter u11, u12, u21 und u22 auch die Verbindungen zwischen den Teilkoppelfeldern GS1 und GS2 und den Zeitmultiplexleitungen L1/1 bis L2/2 in der aus der Zeichnung ersichtlichen Weise umgeschaltet. Diese letztgenannten Umschalter sind in Fig. 2 in derjenigen schaltstellung dargestellt, die sie im Normalbetrieb einnehmen. Für den Fall, daß die Umschalter 2d1 bis 2d4 betätigt werden und daß sie die Anschlußeinheiten 2DIU1 bis 2DIU4 von den Außenanschlüssen des Teilkoppelfeldes GS2 abtrennen und mit den Außenanschlüssen des Teilkoppelfeldes GS1 verbinden, werden in der Anschlußgruppe LTG2 auch die Umschalter u21 und u22 betätigt. Dadurch wird von den Zeitmultiplexleitungen L2/1 und L2/2, die zu der Anschlußgruppe LTG2 führen, in deren Zeitmultiplex-Abschlußschaltung LU2 die zu dem jeweils in Betrieb befindlichen Prozessor, z.B. ZW1, führende Zeitmultiplexleitung, z.B. L2/1, mit der Wirkung umgeschaltet, daß diese Zeitmultiplexleitung nunmehr statt mit dem Teilkoppelfeld GS2 (über LH2-Ruheseite) vielmehr mit dem Teilkoppelfeld GS1 (über LG1-Ruheseite) verbunden sind, wobei in diesem Betriebsfall mit Hilfe des weiteren Umschalters LG1 festgelegt ist, ob diese umgeschaltete Verbindung eine Zeitmultiplexverbindung zum Zentralkoppelfeld K1 oder zum Zentralkoppelfeld K2 ist, in der soeben angesprochenen Betriebssituation also eine Verbindung zum Zentralkoppelfeld K1.

Wird also ein Teilkoppelfeld umgeschaltet, so betrifft dies sowohl ihre außenseitigen Teilkoppelfeldanschlüsse, als auch ihre innenseitigen Teilkoppelfeldanschlüsse. Durch eine Umschaltung in eine Anschlußgruppe, z. B. LTG2 werden sowohl ihre Anschlußeinheiten, z. B. 2DIU1 bis 2DIU4, als auch ihre Zeitmultiplex-Anschlußleitungen, z.B. L2/1 und L2/2, von dem Teilkoppelfeld, z. B. GS2, der betreffenden Anschlußgruppe, z. B. LTG2, zum Teilkoppelfeld, z. B. GS1, der jeweiligen Partner-Anschlußgruppe, z. B. LTG1 umgeschaltet. Diese Umschaltung kann in einem Störungsfall zwecks Unwirksammachens der betreffenden Störung in einem einzigen Anschlußgruppen-Paar für eine seiner beiden Anschlußgruppen oder ebenso bei mehreren störungsbetroffenen Anschlußgruppen vorgenommen werden, oder zwecks Vorbereitung obiger Prozessor-Ersatzschaltung auch zugleich bei allen Anschlußgruppen-Paaren.

Wie aus den Figuren 1 und 2 der Zeichnung ersichtlich ist, ist jeder der dezentralen Steuereinrichtungen GP1 und GP2 je ein Verbindungsdatenspeicher GR1 und GR2 individuell zugeordnet. Außerdem ist jeder dieser Steuereinrichtungen eine Sende- und Empfangseinrichtung GA1 bzw. GA2 individuell zugeordnet. Diese sind über einen dezentralen Datenübertragungsweg GL1/2 miteinander verbunden. Hierüber können die beiden dezentralen Steuereinrichtungen gegenseitig Verbindungsdaten mit Hilfe der genannten Sende- und Empfangseinrichtungen übertragen. Diese können zusätzlich auch die Aufgabe einer Zwischenspeicherung im Zusammenhang mit dem jeweiligen Übertragungsvorgang haben.

Es ist nun vorgesehen, daß jede dezentrale Steuereinrichtung in ihrem Verbindungsdatenspeicher Verbindungsdaten über jede bestehende von Teilnehmerstelle zu Teilnehmerstelle durchgeschaltete Verbindung speichert. Es kann auch vorgesehen werden, daß auch Verbindungsdaten solcher Verbindungen gespeichert werden, die sich noch im Stadium des Verbindungsaufbaues befinden, oder lediglich auch solcher Verbindungen, die bereits von Teilnehmerstelle zu Teilnehmerstelle durchgeschaltet worden sind, bei denen sich der jeweils angerufene Teilnehmer jedoch noch nicht gemeldet hat.

Die Verbindungsdaten, die in den Verbindungsdatenspeichern gespeichert werden, geben bzgl. der über das zugeordnete Teilkoppelfeld bestehenden individuellen Verbindungen an, welcher außenseitige Teilkoppelfeldanschluß mit welchem innenseitigen Teilkoppelfeldanschluß verbunden ist. Das "zugeordnete" Teilkoppelfeld ist also jeweils dasjenige, welches zu derselben Anschlußgruppe gehört, wie die betreffende dezentrale Steuereinrichtung und ihr Verbindungsdatenspeicher. Da jede von einer Teilnehmerstelle zu einer anderen Teilnehmerstelle durchgeschaltete Verbindung immer ein Teilkoppelfeld, das jeweilige Zentralkoppelfeld und erneut ein Teilkoppelfeld durchläuft, gehören zu einer von einer Teilnehmerstelle zu einer anderen Teilnehmerstelle durchgeschalteten Verbindung also immer zwei Verbindungen jeweils innerhalb eines oder je eines Teilkoppelfeldes. Diese Verbindungen können auch als "Teilverbindungen" bezeichnet werden. Es ist also vorgesehen, daß im normalen Vermittlungsbetrieb in jeder Anschlußgruppe die Verbindungsdaten derjenigen Verbindungen gespeichert sind, die über das jeweilige Teilkoppelfeld verlaufen.

Weiterhin ist vorgesehen, daß die dezentralen Steuereinrichtungen, die zu einem Paar von Anschlußgruppen gehören, einander gegenseitig die Verbindungsdaten aller neu durchgeschalteten Verbindungen übertragen. Die Verbindungsdaten aller Verbindungen, die also z. B. über das Teilkoppelfeld GS2 durchgeschaltet werden, überträgt die dezentrale Steuereinrichtung GP2 aus ihrem Verbindungsspeicher GR2 zur dezentralen Steuereinrichtung GP1 und umgekehrt. Letztere speichert die von ihrer Partner-Steuereinrichtung empfangenen Verbindungsdaten in ihrem jeweiligen Verbindungsspeicher und darüber hinaus schaltet jede dezentrale Steuereinrichtung anhand der jeweils von ihrer Partner-Steuereinrichtung empfangenen Verbindungsdaten Verbindungen ("Teilverbindungen", s.o.!) innerhalb desjenigen Teilkoppeldes durch, das mit ihr zur gleichen Anschlußgruppe gehört.

In diesem Zusammenhang kann vorgesehen werden, daß die Verbindungsdaten von jeder der beiden dezentralen Steuereinrichtung im laufenden Vermittlungsbetrieb übertragen werden, und daß jede der beiden dezentralen Steuereinrichtungen aufgrund dieser Verbindungsdaten laufend die betreffenden Teilverbindungen herstellt. In Abweichung hiervon kann auch vorgesehen werden, daß jede der beiden dezentralen Steuereinrichtungen für sich die das ihr jeweils zugeordnete Teilkoppelfeld betreffenden Verbindungsdaten speichert, und daß diese von jeder der beiden dezentralen Steuereinrichtungen jeweils zu ihrer Partner-Steuereinrichtung aufgrund eines Umschaltungs-Vorbereitungskennzeichens übertragen werden, und daß jede der beiden dezentralen Steuereinrichtungen aufgrund dieser gespeicherten, übertragenen Verbindungsdaten die betreffenden Teilverbindungen herstellt. Ebenso aber kann auch vorgesehen werden, daß jede der beiden dezentralen Steuereinrichtungen für sich die das ihr jeweils zugeordnete Teilkoppelfeld betreffenden Verbindungsdaten speichert, und daß diese laufend von jeder der beiden dezentralen Steuereinrichtungen jeweils zu ihrer Partner-Steuereinrichtung übertragen werden, und daß jede der beiden dezentralen Steuereinrichtungen aufgrund dieser gespeicherten, übertragenen Verbindungsdaten und aufgrund eines Umschaltungs-Vorbereitungskennzeichens die betreffenden Teilverbindungen herstellt.

Auf diese Weise sind also im normalen Vermittlungsbetrieb in jedem Teilkoppelfeld sowohl Verbindungen durchgeschaltet, über die von Teilnehmerstelle durchgeschaltete Verbindungen, über die die betreffenden Teilnehmer kommunizieren können, geführt sind, als auch Verbindungen zwischen außenseitigen und innenseitigen Teilkoppelfeldanschlüssen, die im normalen Vermittlungsbetrieb unbenutzt sind. Diese Verbindungen verlaufen von außenseitigen Teilkoppelfeldanschlüssen, z.B. des Teilkoppelfeldes GS1, die in der jeweils anderen Anschlußgruppe, z. B. LTG2, mit den Arbeitsseiten der, z. B. Umschalter 2d1 bis 2d4, sind zu innenseitigen Teilkoppelfeldanschlüssen, die über die Umschalter LG1 bzw. LG2 mit den Arbeitsseiten der Umschalter u21 und u22 bzw. u11 und u12 verbunden sind. Alle diese Umschalter sind zweckmäßig als elektronisch arbeitende Schalter in an sich bekannter Weise ausgebildet.

Wird nun von einer Anschlußgruppe die dezentrale Steuereinrichtung und das Teilkoppelfeld außer Betrieb genommen, so werden im Zuge der dies bewerkstelligenden Umschaltung einerseits die Anschlußeinheiten dieser Anschlußgruppe und andererseits die Zeitmultiplex-Anschlußleitungen, die von dieser Anschlußgruppe zum zentralen (gedoppelten) Koppelfeld führen, mit Hilfe der beschriebenen Umschalter, z. B. 2d1 bis 2d4 und u21 und u22, zum Teilkoppelfeld der jeweiligen Partner-Anschlußgruppe umgeschaltet, und zwar zu denjenigen außenseitigen und innenseitigen Teilkoppelfeldanschlüssen, zwischen denen bereits die zuvor beschriebenen Teilkoppelfeldverbindungen, ("Teilverbindungen" s.o.!) die bis dahin unbenutzt waren, vorbereitend hergestellt sind. Auf diese Weise wird erreicht, daß im Zuge einer Umschaltung der zuletzt beschriebenen Art Verbindungen, die von Teilnehmerstelle zu Teilnehmerstelle bereits durchgeschaltet sind, nicht unterbrochen werden müssen.

Es werden also im normalen Vermittlungsbetrieb von jeder der beiden dezentralen Steuereinrichtungen, die zu einem Paar von Anschlußgruppen gehören, über dezentrale, den Anschlußgruppen-Paaren jeweils individuelle Übertragungswege Verbindungsdaten an die jeweils entsprechende Partner-Steuereinrichtung übertragen. Jede der beiden dezentralen Steuereinrichtungen baut anhand dieser übertragenen und jeweils von ihr empfangenen Verbindungsdaten Verbindungen über das Teilkoppelfeld der jeweils zugeordneten Anschlußgruppe auf, und zwar zu außenseitigen Teilkoppelfeldanschlüssen, mit denen bei einer Umschaltung die Anschlußeinheiten einer ersten Anschlußgruppe zu dem Teilkoppelfeld einer zweiten Anschlußgruppe der jeweiligen Partner-Anschlußgruppe durch die Umschaltung verbindbar sind.

Ist eine Umschaltung auf diese Weise bei allen Anschlußgruppen erfolgt, und zwar zwecks Vorbereitung einer Ersatzschaltung, so arbeitet in allen Anschlußgruppen-Paaren jeweils nur eine dezentrale Steuereinrichtung, z.B. GP1 und ein Teilkoppelfeld, z. B. GS1, für die Abwicklung des Vermittlungsbetriebes beider Anschlußgruppen. In diesem Beispiels-Fall sind die Umschalter 2d1 bis 2d4 und u21 und u22 in ihrer Arbeitslage. Ferner war oben angenommenen worden, daß der Vermittlungsbetrieb zunächst noch mit dem Zentralprozessor ZW1 über das Zentralkoppelfeld K1 abgewickelt wird. Deshalb sind die Umschalter LH1, LH2, LG2, LG2 in ihrer dargestellten Ruhelage. In dieser Betriebssituation ist - wie sich aus Fig. 2 ergibt - als Ergebnis der erfolgten Umschaltung die Zeitmultiplexleitung L2/1 der Anschlußgruppe LTG2 über die Arbeitsseite des Umschalters u21 und die Ruheseite des Umschalters LG1 mit dem Teilkoppelfeld GS1 der Anschlußgruppe LTG1 verbunden.

Zusätzlich ist in dieser Betriebssituation die Zeitmultiplexleitung L2/2 über die Arbeitsseite des Umschalters u22 und die Ruheseite des Umschalters LH2 mit dem Teilkoppelfeld GS2 derselben Anschlußgruppe verbunden und ist über dieses verbindbar mit der dezentralen Steuereinrichtung GP2. Über diesen Weg erfolgt in Vorbereitung für die bevorstehende, weiter oben bereits ausführlicher beschrieben, Ersatzschaltung der Datenladevorgang Programminformationen und vermittlungstechnische Informationen für diese Steuereinrichtungen.

## Patentansprüche

1. Schaltungsanordnung für zentralgesteuerte Fernmeldevermittlungsanlagen, insbesondere PCM-Zeitmultiplex-Fernsprechvermittlungsanlagen, in denen eine der Verbindungsdurchschaltung dienendes zentrales Koppelfeld (K1,K2) samt einem unter anderem dessen Steuerung sowie einer hierfür erforderlichen Schaltkennzeichenverarbeitung dienenden zentralen Prozessor (ZW1,ZW2) vorgesehen ist, und in denen eine Mehrzahl von dezentralen Anschlußgruppen (LTG) mit je einem Teilkoppelfeld (GS) zum außenseitigen Anschluß von Verbindungs- und/oder Teilnehmerleitungen und mit je einer dezentralen Steuereinrichtung (GP) zur Schaltkennzeichenaufnahme von diesen Leitungen, zur Schaltkennzeichenvorverarbeitung sowie zur Schaltkennzeichenweiterleitung an den zentralen Prozessor (ZW1,ZW2) und zur Schaltkennzeichenaussendung auf diese Leitungen ausgestattet ist, und in denen in diesen Anschlußgruppen (LTG) Teilkoppelfelder (GS) innenseitig über Gruppen von Linkleitungen (L1,L2) gruppenweise getrennt mit Koppelfeldanschlüssen des zentralen Koppelfeldes (K) verbunden ist und in denen die Anschlußgruppen jeweils zu zweit einander paarweise zugeordnet sind, und in denen innerhalb jeder derselben zum außenseitigen Anschluß von Teilnehmer- und/oder Verbindungs-Leitungen dienende und innerhalb der jeweiligen Anschlußgruppe (LTG) primär mit ihrem Teilkoppelfeld verbundene Anschlußeinheiten (DIU), z.B. Teilnehmeranschlußschaltungen, Mehrfachteilnehmeranschlußschaltungen,Verbindungsleitungs(-mehrfach-)abschlußschaltungen und dergleichen, in einer Weise umschaltbar sind, durch die die Anschlußeinheiten (DIU) jeweils einer ersten dieser beiden Anschlußgruppen (LTG) zusätzlich an das Teilkoppelfeld (GS) der jeweils anderen, also einer jeweils zweiten Anschlußgruppe (DIU) angeschaltet werden, woraufhin für die über die umgeschalteten Anschlußeinheiten durchzuschaltenden Verbindungen die entsprechende Schaltkennzeichenbearbeitung sowie Teilkoppelfeld-Einstellung ebenfalls von der dezentralen Steuereinrichtung der anderen, also zweiten Anschlußgruppe durchgeführt wird,

**dadurch gekennzeichnet,** daß in Vorbereitung auf eine Umschaltung innerhalb jedes dieser Paare von einander zugeordneten Anschlußgruppen (LTG) jede der betreffenden beiden dezentralen Steuereinrichtungen Verbindungsdaten, die bezüglich aller über das jeweils zugeordnete Teilkoppelfeld (GS) bestehender individueller Verbindungen angeben, welcher aussenseitige Teilkoppelfeldanschluß jeweils mit welchem innenseitigen Teilkoppelfeldanschluß verbunden ist, von jeder der beiden dezentralen Steuereinrichtungen (GP) über dezentrale, den Anschlußgruppen-Paaren (LTG) jeweils individuelle Übertragungswege (GL 1/2) an die jeweils entsprechende Partner-Steuereinrichtung übertragen werden, und daß jede der beiden dezentralen Steuereinrichtungen (GP) anhand dieser übertragenen und jeweils von ihr empfangenen Verbindungsdaten einzelne Teilverbindungen über das Teilkoppelfeld (GS) der betreffenden zugeordneten Anschlußgruppe (LTG) jeweils zwischen innenseitigen Teilkoppelfeldanschlüssen und außenseitigen Teilkoppelfeldanschlüssen aufbaut, und zwar einerseits solchen außenseitigen Teilkoppelfeldanschlüssen, mit denen durch eine Umschaltung (1dn,2dn,LU) die Anschlußeinheiten (DIU) der jeweiligen Partner-Anschlußgruppe (LTG) durch die Umschaltung verbindbar sind, und andererseits solchen innenseitigen Teilkoppelfeldanschlüssen, mit denen durch diese Umschaltung (1dn,2dn,LU) die Anschlußeinheiten der jeweiligen Partner-Anschlußgruppe verbindbar sind.

2. Schaltungsanordnung nach Anspruch 1, **dadurch gekennzeichnet,** daß die Verbindungsdaten von jeder der beiden dezentralen Steuereinrichtungen jeweils zu ihrer Partner-Steuereinrichtung im laufenden Vermittlungsbetrieb übertragen werden, und daß jede der beiden dezentralen Steuereinrichtungen aufgrund dieser Verbindungsdaten laufend die betreffenden Teilverbindungen herstellt.

3. Schaltungsanordnung nach Anspruch 1,
   **dadurch gekennzeichnet,**
   daß jede der beiden dezentralen Steuereinrichtungen für sich die das ihr jeweils zugeordnete Teilkoppelfeld betreffenden Verbindungsdaten speichert, und daß diese von jeder der beiden dezentralen Steuereinrichtungen jeweils zu ihrer Partner-Steuereinrichtung aufgrund eines Umschaltungs-Vorbereitungskennzeichens übertragen werden, und daß jede der beiden dezentralen Steuereinrichtungen aufgrund dieser gespeicherten, übertragenen Verbindungsdaten die betreffenden Teilverbindungen herstellt.

4. Schaltungsanordnung nach Anspruch 1,
   **dadurch gekennzeichnet,**
   daß jede der beiden dezentralen Steuereinrichtungen für sich die das ihr jeweils zugeordnete Teilkoppelfeld betreffenden Verbindungsdaten speichert, und daß diese laufend von jeder der beiden dezentralen Steuereinrichtungen jeweils zu ihrer Partner-Steuereinrichtung übertragen werden, und daß jede der beiden dezentralen Steuereinrichtungen aufgrund dieser gespeicherten, übertragenen Verbindungsdaten und aufgrund eines Umschaltungs-Vorbereitungskennzeichens die betreffenden Teilverbindungen herstellt.

**Claims**

1. Circuit arrangement for centrally controlled telecommunication exchanges, especially PCM time-division-multiplex telephone exchanges, in which a central switching network (K1, K2) used for switching through connections, together with a central processor (ZW1, ZW2) used, inter alia, for controlling the former and for processing switching signals required for this purpose is provided, and in which a plurality of local line trunk groups (LTG) is equipped with one group switch (GS) each for the external connection of junction and/or subscriber lines and with one local group processor (GP) each for receiving switching signals from these lines, for switching signal preprocessing and for switching signal forwarding to the central processor (ZW1,ZW2) and for sending out switching signals on these lines, and in which in these line trunk groups (LTG) group switches (GS) are internally connected via groups of links (L1,L2), separated into groups, to switching network connections of the central switching network (K) and in which the line trunk groups are in each case associated with one another in pairs of twos, and in which within each of the latter, interface units (DIU), for example subscriber line circuits, multiple subscriber line circuits, (multiple) link termination circuits and the like, which are used for the external connection of subscriber and/or junction lines and are primarily connected within the respective line trunk group (LTG) to its group switch, can be switched over in a manner by means of which the interface units (DIU) of in each case a first one of these two line trunk groups (LTG) are additionally connected to the group switch (GS) of the respective other one, that is to say of a respective second line trunk group (LTG), whereupon the corresponding switching signal processing and group switch setting for the connections to be switched through via the switched-over interface units is also carried out by the local group processor of the other, that is to say second line trunk group, characterised in that, in preparation for a switch-over, within each of these pairs of mutually associated line trunk groups (LTG), connection data which specify, with respect to all individual connections existing via the respective associated group switch (GS), which external group switch connection is in each case connected to which internal group switch connection, are transmitted by each of the relevant two local group processors from each of the two local group processors (GP) via local transmission paths (GL 1/2) in each case individual to the line trunk group pairs (LTG) to the respective corresponding partner group processor, and in that each of the two local group processors (GP) establishes, by means of these connection data transmitted and in each case received by it, individual part-connections via the group switch (GS) of the relevant associated line trunk group (LTG) in each case between internal group switch connections and external group switch connections, namely, on the one hand, those external group switch connections by means of which, due to a switch-over (1dn, 2dn, LU) the interface units (DIU) of the respective partner line trunk group (LTG) can be connected due to the switch-over and, on the other hand, those internal group switch connections by means of which the interface units of the respective partner line trunk group can be connected due to this switch-over (1dn, 2dn, LU).

2. Circuit arrangement according to Claim 1, characterised in that the connection data of each of the two local group processors are in each case transmitted to their partner group processor during the current switching operation, and in that each of the two local group processors continuously establishes the relevant part-connections on the basis of these connection data.

3. Circuit arrangement according to Claim 1, characterised in that each of the two local group processors separately stores the connection data concerning the group switch in each case associated with it, and in that these are transmitted by each of the two local group processors in each case to its partner group processor on the basis of a switch-over preparation identification, and in that each of the two local group processors establishes the relevant part-connections on the basis of these stored, transmitted connection data.

4. Circuit arrangement according to Claim 1, characterised in that each of the two local group processors separately stores the connection data concerning the group switch in each case associated with it, and in that these are continuously transmitted by each of the two local group processors in each case to its partner group processor, and in that each of the two local group processors establishes the relevant part-connections on the basis of these stored, transmitted connection data and on the basis of a switch-over preparation identification.

**Revendications**

1. Montage pour des centraux de télécommunications à commande centrale, notamment des centraux téléphoniques MIC à multiplexage temporel, dans lesquels il est prévu un champ de couplage central (k1,k2) utilisé pour l'interconnexion directe de liaisons ainsi qu'un processeur central (ZW1,ZW2), utilisé notamment pour la commande de ce champ de couplage ainsi que pour un traitement, nécessaire à cet effet, d'indicatifs de commutation, et dans lesquels une multiplicité de modules décentralisés de raccordement (LTG) sont équipés respectivement d'un champ de couplage partiel (GS) pour le raccordement, côté extérieur, de lignes de jonction et/ou de lignes d'abonnés, et respectivement d'un dispositif décentralisé de commande (GP) pour la réception d'indicatifs de commutation par ces lignes, pour le prétraitement d'indicatifs de commutation ainsi que pour la retransmission d'indicatifs de commutation au processeur central (ZW1,ZW2) et pour l'envoi d'indicatifs de commutation à ces lignes, et dans lesquels, dans ces modules de raccordement (LTG), des champs de couplage partiels (GS) sont raccordés, sur le côté interne, au moyen de groupes de lignes de liaison (L1,L2), d'une manière séparée par groupes, à des bornes du champ de couplage central (k), et dans lesquels les modules de raccordement sont associés respectivement par couples, et dans lesquels, à l'intérieur de chaque module de raccordement, des unités de raccordement (DIU), par exemple des circuits de raccordement d'abonnés, des circuits de raccordement d'abonnés multiples, des circuits de terminaison (multiples) de lignes de jonction et analogues, utilisés pour le raccordement, côté extérieur, de lignes d'abonnés et/ou de lignes de jonction et reliées, à l'intérieur du module respectif de raccordement (LTG), principalement au champ de couplage partiel de ce module, peuvent être commutés d'une manière telle que les unités de raccordement (DIU) appartenant respectivement à un premier de ces deux modules de raccordement (LTG) sont raccordés en supplément au champ de couplage partiel (GS) de l'autre module respectif de raccordement, c'est-à-dire d'un second module respectif de raccordement (LTG), à la suite de quoi, pour les liaisons devant être interconnectées par l'intermédiaire des unités de raccordement commutées (DIU), le traitement correspondant des indicatifs de commutation ainsi que le réglage des champs de couplage partiels également du dispositif décentralisé de commande de l'autre, c'est-à-dire du second module de raccordement sont exécutés, caractérisé par le fait qu'à titre de préparatifs pour une commutation à l'intérieur de chacun de ces couples de modules de raccordement (LTG) réciproquement associés, chacun des deux dispositifs décentralisés de commande considérés transmet des données de liaison qui indiquent, pour ce qui concerne toutes les liaisons individuelles passant par le champ de couplage partiel respectif associé (GS), quelle borne, côté extérieur, du champ de couplage partiel est raccordée respectivement à quelle borne, côté intérieur, du champ de couplage partiel, et les envoie, par l'intermédiaire de voies décentralisées de transmission (GL1/2), prévues individuellement pour chacun des couples (LTG) de modules de raccordement, au dispositif de commande associé, respectivement correspondant, et que chacun des deux dispositifs décentralisés de commande (GP) établit, sur la base de ces données de liaison transmises et reçues respectivement par ce dispositif, des liaisons partielles individuelles par l'intermédiaire du champ de couplage partiel (GS) du module de raccordement associé considéré (LTG), respectivement entre des bornes, situées côté intérieur, du champ de couplage partiel et des bornes, situées côté extérieur, du champ de couplage partiel, à savoir d'une part des bornes, situées côté extérieur, du champ de couplage partiel, auxquelles les unités de raccordement (DU) du module respectivement associé de raccordement (LTG) peuvent être raccordées par une commutation (1dn, 2dn, LU), et d'autre part les bornes du champ de couplage partiel, situées côté intérieur et auxquelles les unités de raccordement du module de raccordement respectif associé peuvent être raccordées par l'intermédiaire de cette commutation (1dn,2dn,LU).

2. Montage suivant la revendication 1, caractérisé par le fait que les données de liaison de chacun des deux dispositifs décentralisés de commande sont transmises respectivement au dispositif de commande associé, pendant le fonctionnement courant de commutation et que chacun des deux dispositifs décentralisés de commande établit en permanence les liaisons partielles considérées, sur la base de ces données de liaison.

3. Montage suivant la revendication 1, caractérisé par le fait que chacun des deux dispositifs décentralisés de commande autorise, pour soi, les données de liaison concernant le champ de couplage partiel qui lui est respectivement associé, et que ces données sont transmises par chacun des deux dispositifs décentralisés de commande respectivement au dispositif de commande associé, sur la base d'un indicatif de préparation de commutation, et que chacun des deux dispositifs décentralisés de commande établit les liaisons partielles considérées, sur la base de ces données de liaison mémorisées et transmises.

4. Montage suivant la revendication 1, caractérisé par le fait que chacun des deux dispositifs décentralisés de commande mémorise, en soi, des données de liaison concernant le champ de couplage partiel qui lui est respectivement associé, et que ces données sont transmises en permanence par chacun des deux dispositifs décentralisés de commande respectivement au dispositif de commande associé, et que chacun des deux dispositifs décentralisés de commande établit les liaisons partielles considérées, sur la base de ces données de liaison mémorisées et transmises et sur la base d'un indicatif de préparation de commutation.

# FIG 1

# FIG 2